# FASCICULE DE BREVET EUROPEEN

(11) **EP 3 963 259 B1**
(45) Date de publication et mention de la délivrance du brevet: **04.06.2025**
(21) Numéro de dépôt: 19729338.4
(22) Date de dépôt: 30.04.2019
(51) Int. Cl.: F22B 37/14, F22B 37/20, F22B 37/24, F22B 31/04

(54) **MODULE AUTOPORTANT ASSEMBLÉ AUTOUR D'UN ÉCHANGEUR THERMIQUE DE CHAUDIÈRE COMPORTANT UN PASSAGE HORIZONTAL, ET PROCÉDÉ D'INSTALLATION ET D'ENTRETIEN DU PASSAGE HORIZONTAL D'UNE TELLE CHAUDIÈRE**
SELBSTTRAGENDES MODUL ZUSAMMENGESETZT UM EINEN WÄRMETAUSCHER EINES KESSELS MIT EINEM HORIZONTALEN KANAL UND VERFAHREN ZUM INSTALLIEREN UND AUFRECHTERHALTEN DES HORIZONTALEN DURCHGANGS EINES SOLCHEN KESSELS
SELF-SUPPORTING MODULE ASSEMBLED AROUND A HEAT EXCHANGER OF A BOILER COMPRISING A HORIZONTAL PASSAGE, AND METHOD FOR INSTALLING AND MAINTAINING THE HORIZONTAL PASSAGE OF SUCH A BOILER

(43) Date de publication de la demande: 09.03.2022
(73) Titulaire: Paprec Group, 75008 Paris (FR)
(72) Inventeur: MARCARIAN, Eddie, 13400 Aubagne (FR); TEZENAS, Olivier, 83190 Ollioules (FR); PICAUT, Michel, 73420 Viviers du Lac (FR)
(74) Mandataire: Cabinet Camus Lebkiri
(86) Numéro de dépôt international: PCT/FR2019/051008
(87) Numéro de publication internationale: WO 2020/221965

(56) Documents cités:
- EP-A1- 0 064 092
- EP-A1- 0 364 920
- EP-A2- 0 143 432
- WO-A1-2017/220846
- FR-A- 1 226 718
- FR-A- 1 258 570
- GB-A- 1 009 034

## Description

### DOMAINE TECHNIQUE

L'invention se rapporte à un module autoportant qui est destiné à être assemblé autour d'un échangeur thermique de type vaporisateur ou surchauffeur disposé et constituant le passage horizontal d'une chaudière.

L'invention se rapporte également à l'ensemble formé par un échangeur thermique et son module autoportant associé.

L'invention porte en outre sur une chaudière comprenant un passage horizontal dans lequel sont agencés une pluralité de tels ensembles.

L'invention se rapporte aussi à un procédé de montage du passage horizontal d'une telle chaudière.

L'invention porte enfin sur un procédé de démontage et remontage par le bas ou par le haut d'un échangeur de l'ensemble précité.

### ART ANTÉRIEUR

Le document WO 2017/220846 A1 divulgue par exemple un module autoportant destiné à être assemblé autour d'un échangeur thermique d'une chaudière.

Parmi les chaudières industrielles existantes, certaines comportent un passage horizontal dans lequel sont agencées une succession d'échangeurs thermiques de type vaporisateur et surchauffeur. Ces chaudières dites horizontales comportent par exemple un dispositif de combustion de déchets ou de biomasse souillée suivi de système d'échangeurs avec des circuits eau/vapeur et air/fumées.

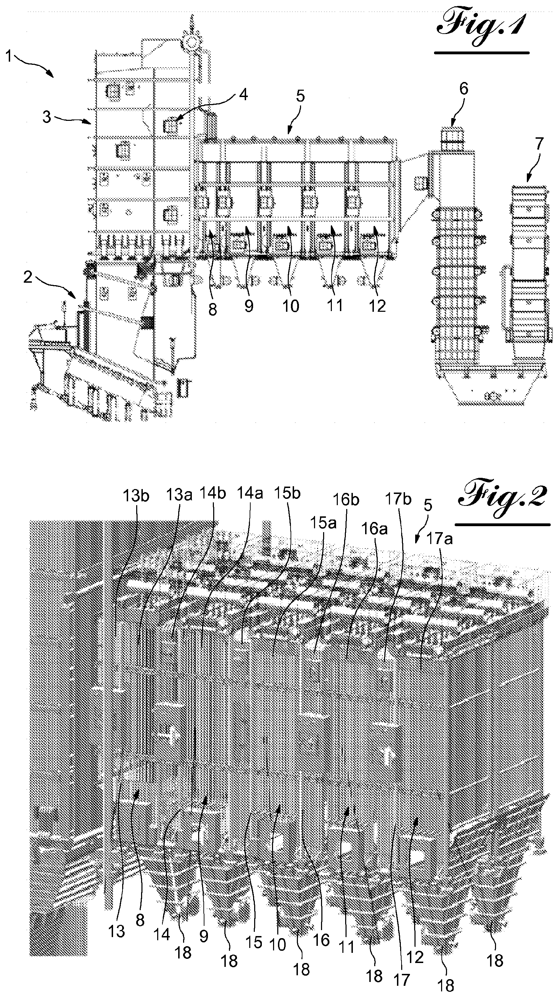

La figure 1 présente une chaudière 1 connue de ce type dans son ensemble qui présente une puissance thermique de 50MWatts et permet de produire de la vapeur à une température de 400°C sous une pression de 60 bars. Cette chaudière comporte, dans le sens de parcours des fumées, un foyer 2 dans lequel brûle le combustible, un premier passage vertical 3 dont les écrans qui forment le passage sont refroidis, un deuxième passage vertical 4 qui comprend des panneaux vaporisateurs et dont les écrans qui forment le passage sont également refroidis, parfois un troisième passage vertical non représenté de même type que le deuxième passage vertical, un passage horizontal 5 comportant les principaux échangeurs (vaporisateurs et surchauffeurs), et deux blocs d'économiseurs 6,7. L'invention porte sur les éléments du passage horizontal 5.

Les échangeurs du passage horizontal 5 sont agencés en deux rangées (une seule rangée est visible sur la figure 1) comme suit et selon le sens du parcours des fumées : jouxtant le deuxième passage vertical 4, on trouve un vaporisateur droit 8 et un vaporisateur gauche (non visible), un surchauffeur haute température droit 9 et un surchauffeur haute température (non visible), un surchauffeur moyenne température droit 10 et un surchauffeur moyenne température (non visible), un surchauffeur basse température droit 11 et un surchauffeur basse température (non visible) et enfin un autre surchauffeur basse température droit 12 et un surchauffeur basse température (non visible).

Une boite (non représentée sur la figure 1) constituée de tubes écrans (tubes à membranes soudées) est agencée autour des échangeurs 8,9,10,11 et 12 du passage horizontal 5 pour assurer l'étanchéité du passage horizontal dans lequel circulent les gaz de combustion issus du foyer 2. Une émulsion eau-vapeur prélevée dans le ballon de la chaudière circule de façon ascendante dans les tubes écrans creux pour les refroidir. Cette circulation fait également office de circuit de vaporisation. L'émulsion circule depuis les vaporisateurs droit 8 et gauche jusqu'aux derniers surchauffeurs basse température droit 12 et gauche du passage horizontal 5 avant d'entrer dans ces mêmes derniers surchauffeurs droit 12 et gauche du passage horizontal 5, puis dans les surchauffeurs basse température droit 11 et gauche, puis dans les surchauffeurs moyenne température droit 10 et gauche, et enfin dans les surchauffeurs droit 9 et gauche haute température.

La circulation de l'émulsion eau-vapeur dans les tubes écrans nécessite la mise en œuvre de calculs de circulation complexes tenant compte des différents types d'écoulement pour assurer une alimentation homogène des tubes écrans dans le régime d'écoulement adéquat impliquant des collecteurs en évitant tout déséquilibre d'alimentation.

En outre, la configuration de la boite de tubes écrans engendre un montage complexe et couteux du passage horizontal puisqu'il est nécessaire de construire sur place la boite de tubes écrans et notamment de réaliser de nombreuses soudures entre les différents panneaux de tubes écrans.

### EXPOSÉ DE L'INVENTION

L'invention vise à remédier à tout ou partie des problèmes de l'état de la technique identifiés ci-dessus en proposant un système pour passage horizontal de chaudière permettant principalement de s'affranchir des contraintes de calcul de circulation d'une émulsion eau-vapeur dans les tubes écrans.

L'invention vise en outre à simplifier le montage ainsi que le démontage, pour les opérations de maintenance, du passage horizontal.

A cet effet et en premier lieu, l'invention vise un module autoportant destiné à être assemblé autour d'un échangeur thermique de chaudière de type comportant un passage horizontal selon la revendication 1.

Dans le module autoportant de l'invention, la circulation s'effectue avec de la vapeur sèche saturée, et ainsi en « circulation forcée », ce qui permet de s'affranchir des différents types d'écoulement et de pouvoir faire circuler la vapeur sèche dans des circuit plus complexes. En outre, le coefficient d'échange thermique de la vapeur saturée est de l'ordre de 0,17 à 0,23 kW/m²/°C alors qu'il est de l'ordre de 2,3 à 2,9 kW/m²/°C. L'utilisation de vapeur sèche saturée permet d'obtenir un gain de surchauffe jusqu'à 20°C de la vapeur saturée avant que la vapeur n'entre dans les surchauffeurs basse température de sorte que le circuit de circulation de vapeur sèche dans les montants tubulaires creux forme un surchauffeur en amont des surchauffeur basse température.

Le module autoportant de l'invention peut également comporter les caractéristiques optionnelles suivantes considérées isolément ou selon toutes les combinaisons techniques possibles :
- Le module comporte un flanc de refroidissement des fumées ménagé en partie inférieure de la partie secondaire du module et comportant une pluralité de tubes creux soudés parallèlement ensemble, configurés pour assurer une circulation de la vapeur sèche saturée alternativement montante et descendante, et en connexion fluidique avec la partie principale du module.
- Le flanc de refroidissement est plan et agencé obliquement vers le haut depuis un montant inférieure de la partie principale du module.
- Le flanc de refroidissement présente un profil en forme de C qui s'étend extérieurement à la partie principale du module depuis un montant inférieure de ladite partie principale du module.
- Le module comporte une pluralité de cloisons et de diaphragmes agencés dans au moins certains montants creux des parties principale et secondaire du module.

L'invention porte également sur un ensemble formé par un échangeur thermique de type vaporisateur ou surchauffeur autour duquel est agencé un module autoportant tel que précédemment énoncé selon la revendication 6.

Avantageusement, lorsque le flanc de refroidissement est plan et oblique, l'échangeur est un vaporisateur, et lorsque le flanc de refroidissement présente un profil en forme de C, l'échangeur est un surchauffeur haute température ou moyenne température.

De préférence, l'échangeur thermique et le module autoportant sont solidarisés entre eux au moyen d'une pluralité de tirants solidaires de la partie supérieure des nappes de l'échangeur thermique via une même pluralité de biellettes, et d'au moins une poutre transversale solidaire du dit module autoportant.

L'invention porte également sur une chaudière comportant un passage horizontal selon la revendication 10.

Avantageusement, le passage horizontal de la chaudière comporte au moins, en suivant le sens des fumées, deux ensembles respectivement gauche et droit dans lesquels l'échangeur est un vaporisateur, deux ensembles respectivement gauche et droit dans lesquels le surchauffeur est un surchauffeur haute température, deux ensembles respectivement gauche et droit dans lesquels le surchauffeur est un surchauffeur moyenne température, deux ensembles pour lesquels le module autoportant ne comporte pas de flanc de refroidissement, et dans lesquels l'échangeur est un surchauffeur basse température.

L'invention porte en outre sur un procédé de montage du passage horizontal d'une chaudière telle que précédemment énoncée selon la revendication 12.

L'invention porte au surplus sur un procédé de démontage et de remontage par le bas d'un échangeur monté dans le passage horizontal d'une chaudière selon la revendication 13.

L'invention porte enfin sur un procédé de démontage et de remontage par le haut d'un échangeur monté dans le passage horizontal d'une chaudière selon la revendication 14.

### BREVE DESCRIPTION DES DESSINS

D'autres caractéristiques et avantages de l'invention ressortiront à la lecture de la description qui suit, en référence aux figures annexées, qui illustrent :
- Figure 1 : une vue schématique de côté d'une chaudière industrielle de type à passage horizontal de l'art antérieur ;
- Figure 2 : une vue schématique en perspective du passage horizontal d'une chaudière selon l'invention ;
- Figure 3 : une vue schématique de côté du passage horizontal d'une chaudière selon l'invention ;
- Figure 4 : une vue schématique en perspective du module autoportant de l'invention selon une première variante destiné à être assemblé autour d'un vaporisateur ;
- Figure 5 : une vue schématique en perspective du module autoportant de la figure 6 depuis la flèche V ;
- Figure 6 : une représentation schématique d'un diaphragme agencé dans un montant tubulaire d'un module autoportant de l'invention ;
- Figure 7 : une représentation en perspective identique à celle de la Figure 4 illustrant la circulation de vapeur sèche saturée dans les montants du module autoportant ainsi que dans les tubes écrans et le flanc de refroidissement.
- Figure 8 : une vue schématique en perspective d'un ensemble selon l'invention formé par un module autoportant de l'invention selon une deuxième variante, assemblé autour d'un surchauffeur basse température ;
- Figure 9 : une vue schématique en perspective de la partie supérieure de l'ensemble de la Figure 8 ;
- Figure 10 : une vue schématique en perspective du module autoportant de l'invention selon une troisième variante destiné à être assemblé autour d'un surchauffeur haute ou moyenne température ;
- Figure 11 : une vue schématique en perspective du module autoportant de la figure 10 depuis la flèche XI ;
- Figure 12 : une représentation en perspective identique à celle de la Figure 10 illustrant la circulation de vapeur sèche saturée dans les montants du module autoportant ainsi que dans les tubes écrans et le flanc de refroidissement ;
- Figure 13 : une vue schématique d'une opération de montage d'un ensemble selon l'invention formé par un module autoportant de l'invention assemblé autour d'un surchauffeur haute température ;
- Figure 14 : une vue schématique en perspective de la partie supérieure d'un ensemble de l'invention lors de l'opération d'assemblage de poutres de manutention sur les collecteurs de l'échangeur au cours du procédé de démontage par le bas d'un échangeur de l'invention ;
- Figure 15 : une vue schématique en élévation du système de poulie et portique pour assurer l'opération de descente d'un échangeur lors du procédé de démontage par le bas de l'invention ;
- Figure 16 : une vue schématique de côté illustrant l'opération de découpe des tirants pour désolidariser l'échangeur du module autoportant lors du procédé de démontage par le bas d'un échangeur de l'invention ;
- Figure 17 : trois vues schématiques en perspective illustrant respectivement un échafaudage de maintenance d'un échangeur positionné sous l'ensemble formé par le module autoportant de l'invention et un échangeur, la descente de l'échangeur dans l'échafaudage et l'échangeur réceptionné dans l'échafaudage ;
- Figure 18 : une vue en coupe de la partie surmontant le module de l'invention illustrant l'installation de nouveaux tirants lors du procédé de démontage par le bas de l'invention ;
- Figure 19 : une vue schématique en perspective de la partie supérieure de l'ensemble formé par le module autoportant de l'invention et un échangeur au niveau de laquelle est opérée l'opération de désolidarisation de l'échangeur et du module autoportant au cours du procédé de démontage par le haut d'un échangeur de l'invention ; et
- Figure 20 : une vue schématique illustrant l'opération de levage d'un échangeur lors du procédé de démontage par le haut d'un échangeur de l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE

L'invention porte en premier lieu et au principal sur un module autoportant destiné à être assemblé autour d'un échangeur, étant entendu qu'il est prévu selon l'invention que chaque échangeur du passage horizontal comporte un module autoportant associé, parfois de configuration différente selon la nature de l'échangeur comme il sera vu plus loin. Avantageusement, chaque module autoportant comporte des tubes écrans qui, lorsque les modules autoportants sont assemblés entre eux dans le passage horizontal de la chaudière, forment une boite écran qui assure l'étanchéité du passage horizontal.

En référence à la figure 2, on retrouve les échangeurs d'un passage horizontal de l'art antérieur soit, en ne considérant que la partie droite du passage horizontale, le vaporisateur 8, le surchauffeur haute température 9, le surchauffeur moyenne température 10, le premier surchauffeur basse température 11 et le second surchauffeur basse température 12. Autour de chacun de ces échangeurs 8, 9, 10, 11, 12 est monté un module autoportant associé de l'invention 13, 14, 15, 16 et 17 qui comporte une première 13a, 14a, 15a, 16a, 17a et une seconde 13b, 14b, 15b, 16b, 17b pluralités de tubes écrans soudés entre eux et disposés du côté extérieur du passage horizontal. L'assemblage en bout à bout des modules autoportants 13, 14, 15, 16 et 17 et des première 13a, 14a, 15a, 16a, 17a et seconde 13b, 14b, 15b, 16b, 17b pluralités de tubes écrans autour des échangeurs associés 8, 9, 10, 11, 12 permet d'assurer l'étanchéité de ce passage horizontal 5.

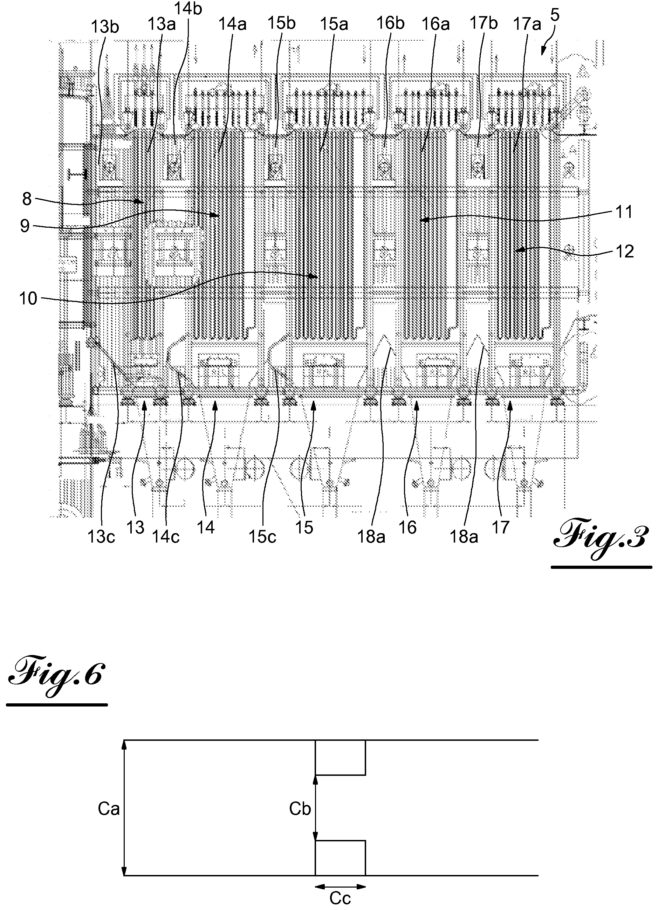

En outre, chaque module autoportant est spécifiquement configuré selon l'échangeur autour duquel il est assemblé. Notamment, en référence à la figure 3, le module autoportant 13 associé au vaporisateur 8 comporte en partie inférieur un flanc de refroidissement des fumées 13c qui est plan et oblique. Les modules autoportant 14 et 15 des surchauffeurs haute température 9 et moyenne température 10 comportent en partie inférieur un flanc de refroidissement des fumées 14c,15c qui présente un profil en forme de C. Les modules autoportant 16, 17 des surchauffeurs basse température 11, 12 ne comportent pas de flanc de refroidissement des fumées, seule la partie supérieure 18a de la trémie 18 (voir figure 2) connue de l'art antérieur et permettant de collecter les cendres des fumées et associée à chaque échangeur étant visible. Le détail de conception des modules autoportant et leurs particularités selon l'échangeur associé sont exposés plus loin. La description faite précédemment pour la partie droite du passage horizontal vaut également pour la partie gauche du passage horizontal.

Dans la description qui suit, les termes « vertical » et « horizontal » sont utilisés relativement à la configuration de l'échangeur thermique qui est destiné à être agencé dans le module autoportant et qui présente une forme générale de parallélépipède droit. En outre, dans la description qui suit les termes « extérieur » et « intérieur » sont utilisés relativement à une position extérieure ou intérieure du passage horizontal lorsque le module est agencé dans ce passage horizontal.

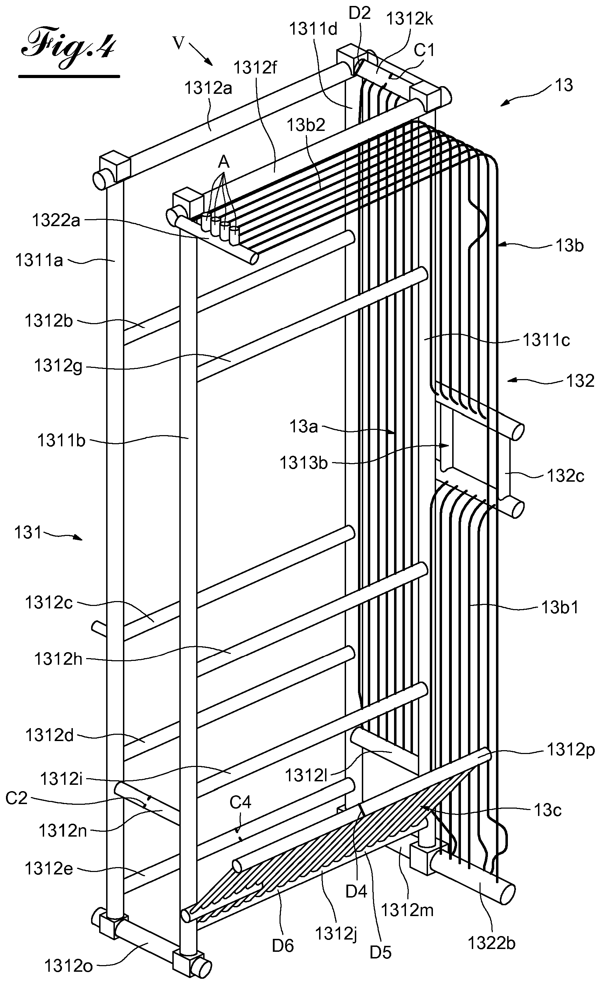

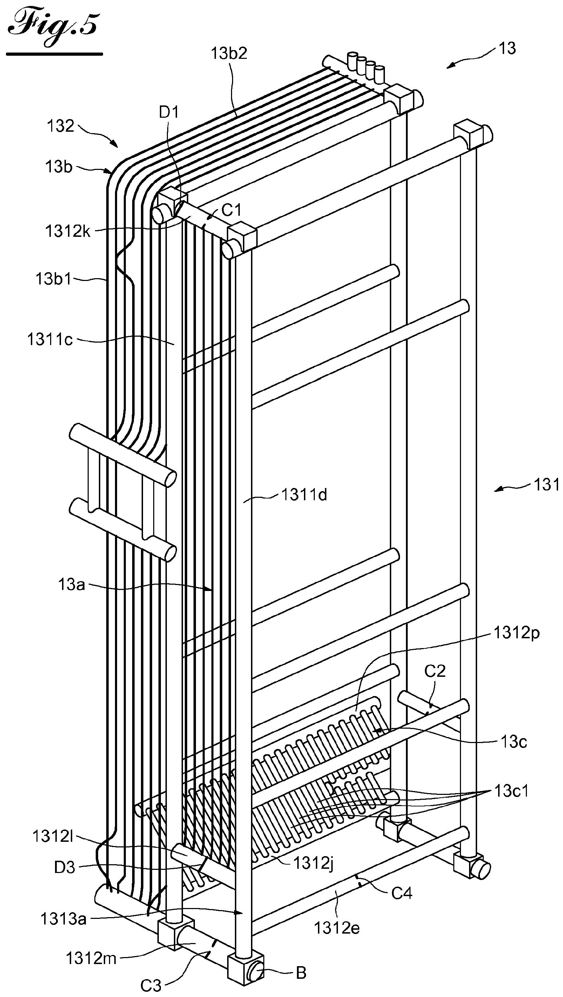

En référence aux figures 4 à 7, un exemple de réalisation d'un module autoportant 13 de vaporisateur 8 ainsi que les flux de circulation de vapeur sèche saturée dans ce module autoportant sont décrits ci-après. On se réfère d'abord aux figures 4 et 5 pour décrire le module autoportant 13.

Ce module 13 se compose d'une partie principale 131 et d'une partie secondaire adjacente 132. La partie principale 131 comporte quatre montants tubulaires creux verticaux 1311a, 1311b, 1311c, 1311d définissant un parallélépipède de logement du vaporisateur non représenté sur ces figures. La partie principale comporte également des montants tubulaires creux horizontaux s'étendant chacun entre deux montants verticaux adjacents et répartis de la façon suivante :
- cinq montants longitudinaux 1312a, 1312b, 1312c, 1312d, 1312e s'étendant longitudinalement entre deux montants verticaux 1311a, 1311d depuis la partie supérieure du module 13 jusqu'à sa partie inférieure,
- cinq montants longitudinaux opposés 1312f, 1312g, 1312h, 1312i, 1312j s'étendant longitudinalement entre les deux montants verticaux opposés 1311b, 1311c depuis la partie supérieure du module jusqu'à sa partie inférieure,
- trois montants latéraux 1312k, 1312l, 1312m destinés à être disposés du côté extérieur du passage horizontal et qui s'étendent respectivement en partie supérieure et en partie basse du module autoportant 13 entre les deux montants verticaux extérieurs 1311c, 1311d, et
- deux montants latéraux opposés 1312n, 1312o situés en partie basse du module autoportant 13 entre les deux montants verticaux intérieurs opposés 1311a, 1311b.

La partie principale comporte également la première pluralité de tubes écrans 13a qui s'étendent verticalement entre deux montants latéraux adjacents extérieurs 1312k, 1312l.

La partie secondaire adjacente 132 comporte un premier montant horizontal supérieur latéral 1322a situé en partie supérieure du module 13 du côté intérieur du passage horizontal et solidaire de l'extrémité du montant horizontal longitudinal supérieur 1312f de la partie principale 131, et un second montant horizontal inférieur latéral 1322b situé en partie inférieure du module 13 du coté extérieur du passage horizontal et solidaire de l'extrémité inférieure du montant vertical 1311c le plus proche de la partie principale 131.

La partie secondaire 132 comporte également la seconde pluralité de tubes écrans 13b qui s'étendent entre les deux montants latéraux 1322a, 1322b en formant une première partie verticale 13b1 destinée à être agencée du coté extérieur du passage horizontal et une seconde partie horizontale 13b2 destinée à être agencée en partie supérieure du module 13.

Deux cadres 1313a, 1313b sont intégrés respectivement sous la première pluralité de tubes écrans 13a et au sein de la partie verticale 13b2 de la seconde pluralité de tubes écrans 13b pour recevoir des portes d'accès non représentées au vaporisateur. Le cadre 1313b est agencé au sein de la partie verticale 13b1 de la seconde pluralité de tubes écrans 13b de façon à permettre la circulation verticale du flux de vapeur sèche sur toute la hauteur de ces tubes écrans 13b1 et la mise en place d'une porte d'accès.

La partie secondaire adjacente 132 comporte en outre un flanc de refroidissement des fumées 13c qui est ménagé en partie inférieure en s'étendant entre un montant longitudinal inférieur 1312j et un montant longitudinal supérieur 1312p déporté vers l'extérieur du parallélogramme défini par la partie principale 131. Le flanc de refroidissement 13c se compose d'une pluralité de tubes creux 13c1 soudés parallèlement entre eux qui sont configurés pour assurer la circulation de la vapeur sèche alternativement montante et descendante comme il sera vu plus loin.

Il est prévu une entrée A de vapeur sèche dans le module 13 et une sortie B.

Le module autoportant 13 est configuré pour que la vapeur sèche circule dans tous les montants tubulaires, tubes écrans et tubes du flanc de refroidissement tout en limitant la perte de charge. A cet effet, les montants tubulaires creux, les tubes écrans et les tubes du flanc de refroidissement sont en connexion fluidique les uns avec les autres.

A cet effet également, des cloisons et diaphragmes sont montés dans les tubes. Au moins deux diaphragmes et quatre cloisons sont nécessaires selon le débit de vapeur circulant dans le module autoportant. A titre d'exemple, on prévoit quatre diaphragmes et six cloisons agencés comme suit. Un premier diaphragme C1 est agencé dans le montant tubulaire latéral supérieur 1312k, un deuxième diaphragme C2 est agencé dans le montant tubulaire latéral inférieur opposé 1312n, un troisième diaphragme C3 est agencé dans le montant tubulaire latéral inférieur 1312m, et un quatrième diaphragme C4 est agencé dans le montant tubulaire longitudinal inférieur 1312e.

On se réfère à la figure 6 pour exposer les caractéristiques de ces quatre diaphragmes C1, C2, C3, C4. Trois caractéristiques sont données à cet effet, respectivement le diamètre Ca du tube dans lequel le diaphragme est monté, le diamètre d'ouverture du diaphragme Cb et la largeur Cc du diaphragme. Le Tableau 1 ci-dessous rapporte en millimètres ces trois caractéristiques pour les quatre diaphragmes C1, C2, C3, C4.

**Tableau 1**

| | C1 | C2 | C3 | C4 |
|---|---|---|---|---|
| Ca | 123,9 | 89,3 | 174,7 | 89,3 |
| Cb | 60 | 40 | 40 | 40 |
| Cc | 6 | 6 | 6 | 6 |

L'agencement des six cloisons est comme suit. Une première cloison D1 est agencée en partie supérieure du module 13 à la jonction des trois montants tubulaires 1311c, 1312f, 1312k. Une deuxième cloison D2 est agencée en partie supérieure du module 13 à la jonction des trois montants tubulaires 1311d, 1312a, 1312k. Une troisième cloison D3 est agencée en partie inférieure du module au niveau d'un montant latéral 1312l. Les trois autres cloisons D4, D5, D6 sont situées au niveau du flanc de refroidissement 13c. La quatrième cloison D4 est agencée approximativement au milieu du montant supérieur 1312p du flanc de refroidissement 13c. Le montant inférieur 1312j du flanc de refroidissement 13c comporte la cinquième D5 et la sixième D6 cloison répartis comme illustré sur la figure 4.

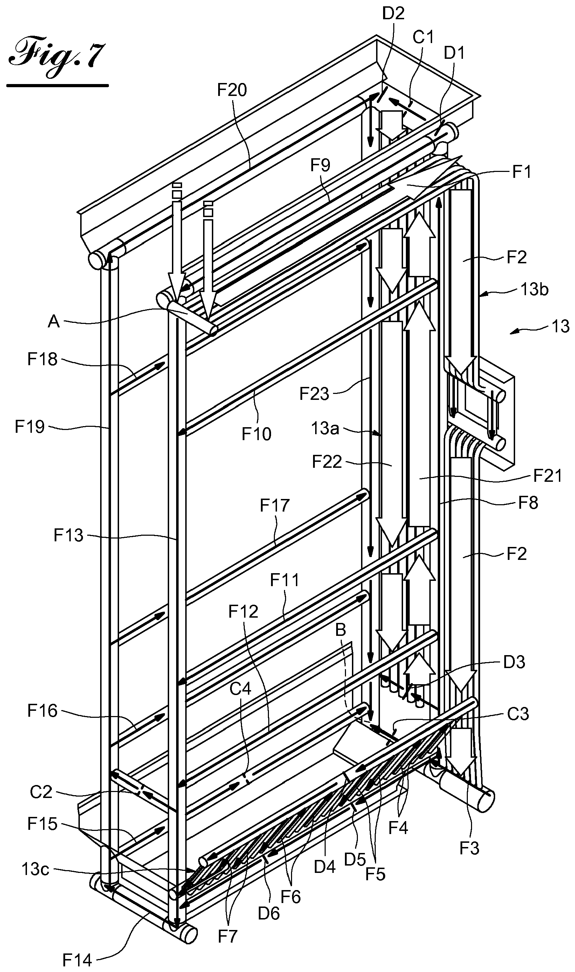

On décrit en référence à la figure 7 le parcours des flux de vapeur sèche saturée dans le module autoportant 13 de l'invention depuis l'entrée A jusqu'à la sortie B. Sur cette figure et pour des raisons de clarté, les références des montants tubulaires et des tubes du flanc de refroidissement n'ont pas été reportés. On a principalement identifié les flux, les diaphragmes et les cloisons. On se reporte aux figures 4 et 5 pour suivre les références faites aux montants tubulaires et aux tubes du flanc de refroidissement dans la description de la figure 7 qui suit.

La vapeur sèche est introduite en A via quatre tubes non représentés sur la figure 7 mais visibles sur les figures 4 et 5. La vapeur circule alors selon la flèche F1 dans la partie horizontale 13b2 des tubes écrans de la partie secondaire 13b du module 13, puis dans la partie verticale 13b1 des tubes écrans selon la flèche F2 jusqu'au montant latéral inférieur 1322b dans lequel la vapeur circule selon la flèche F3. La vapeur est ensuite distribuée dans le flanc de refroidissement 13c, en circulant alternativement de façon ascendante selon les flèches F4, F6 et descendante selon les flèches F5, F7 du fait du positionnement des trois cloisons D4, D5, D6 ainsi que dans les montants longitudinaux inférieur 1312j et supérieur 1312p du flanc de refroidissement 13c. La vapeur sèche rejoint alors la partie inférieure du montant vertical 1311b et le flux F13 décrit plus loin.

La vapeur qui circule selon la flèche F3 est également distribuée dans le montant latéral inférieur 1312m de la partie principale 13a du module 13 vers la sortie B, et dans le montant vertical 1311c selon la flèche F8 puis dans le montant supérieur longitudinal 1312f selon la flèche F9 avant de descendre dans le montant vertical 1311b selon la flèche F13. En outre, depuis la circulation selon la flèche F8, la vapeur circule dans les trois montants longitudinaux 1312g, 1312h, 1312i selon les flèches respectives F10, F11, F12 en alimentant le flux F13 du montant vertical 1311b.

La vapeur sèche circule alors dans le montant latéral inférieur 1312o selon la flèche F14 avant de remonter dans le montant vertical 1311a selon la flèche F19 puis dans le montant longitudinal supérieur 1312a selon la flèche 20 avant de redescendre dans le montant vertical 1311d (flèche 23) vers la sortie B. En outre, depuis la circulation selon la flèche F19, la vapeur circule dans les quatre montants longitudinaux 1312e, 1312d, 1312c, 1312b selon les flèches respectives F15, F16, F17, F18 en alimentant le flux F23 du montant vertical 1311d.

Enfin, depuis la circulation selon la flèche F8 et grâce au diaphragme C3, la vapeur circule dans le montant latéral inférieur 1312l, et grâce à la cloison D3, la vapeur circule selon un flux ascendant (flèche F21) et descendant (flèche F22) dans les tubes écrans 13a de la partie principal 13 avant de rejoindre, via respectivement le montant latéral supérieur 1312k, et le montant latéral inférieur 1312l, le montant vertical 1311d et le flux de la flèche F23 vers la sortie B.

Les agencements des montants tubulaires, des tubes écrans, des tubes du flanc de refroidissement ainsi que les cloisons et diaphragmes permettent de limiter la perte de charge de la vapeur sèche circulant dans le module 13 à 0,7 Bar.

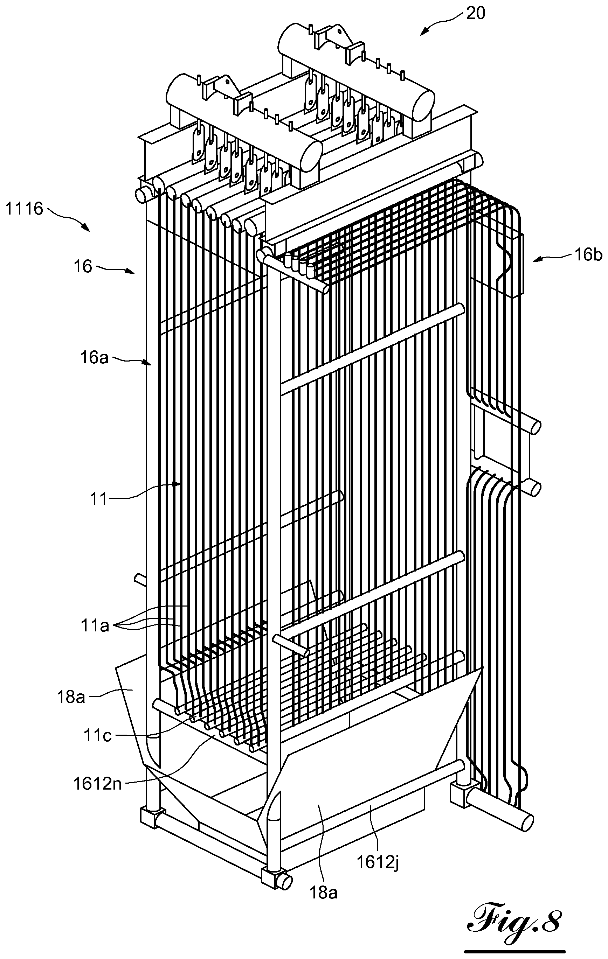

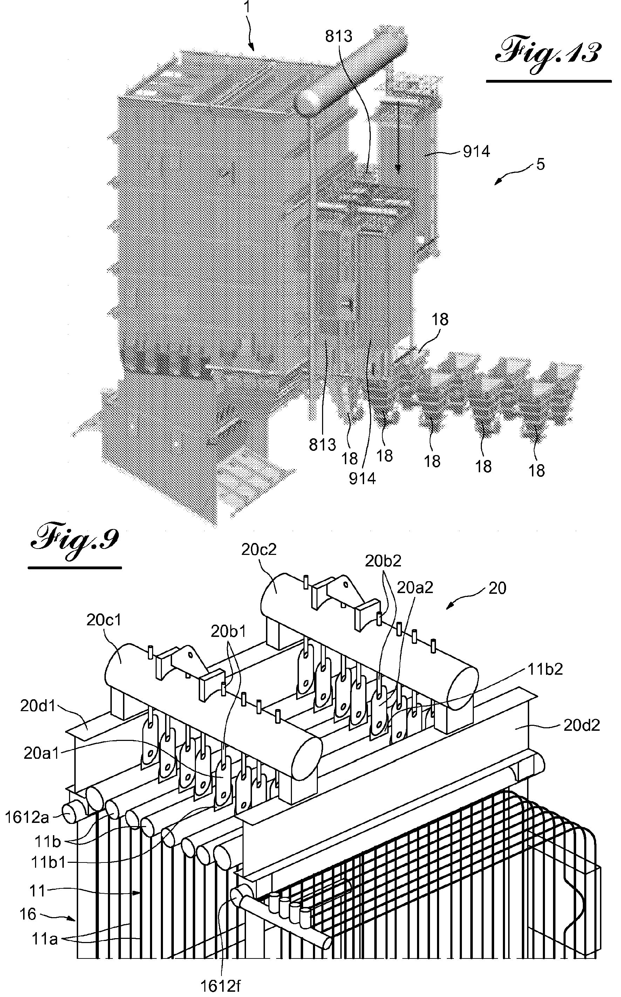

On se réfère à présent aux figures 8 et 9 qui illustrent un ensemble formé par un module autoportant 16 et un surchauffeur basse température 11 logé dans ledit module 16. Ce module autoportant 16 est identique au module autoportant 17 des autres surchauffeurs basse température 12.

Le module autoportant 16 est également identiquement constitué que le module autoportant 13 dont la description vient d'être faite, excepté en deux points :
- la largeur de la partie principale 16a est supérieure à la largeur de la partie principale 13a du module 13 conçu pour un vaporisateur et ce, pour s'adapter à la largeur du surchauffeur 12 et permettre à la fois de loger le surchauffeur dans le parallélépipède défini par la partie principale 16a et que les montants tubulaires de la partie principale 16a soit disposés le long des nappes du surchauffeur, et
- le module 16 ne comporte pas de flanc de refroidissement en raison de son positionnement en bout de passage horizontal et ainsi du fait que les températures des fumées qui circulent dans le passage horizontal au niveau des surchauffeurs basse température sont moins élevées que celles circulant au niveau des vaporisateurs et des surchauffeurs haute et moyenne température. La partie supérieure 18a de la trémie est représentée en partie inférieure de l'ensemble 1116. La circulation des flux de vapeur sèche dans le module autoportant 16 est réalisée de façon adaptée, notamment (figure 7) par une circulation directe du flux F3 vers le flux F13 via le montant inférieur longitudinal 1612j.

L'ensemble 1116 comporte ainsi le module autoportant 16 qui reçoit dans le volume de sa partie principale 16a le surchauffeur basse température 11. Les montants tubulaires du module 16 s'étendent ainsi le long des nappes 11a du surchauffeur 11. Ainsi, l'agencement des montants, en particulier de la partie principale 16a du module 16, permet d'assurer une bonne tenue mécanique de l'ensemble 1116, notamment lors du transport de cet ensemble 1116 pour son montage sur site, comme il sera vu plus loin.

En partie inférieure du surchauffeur 11, les collecteurs de frappage 11c sont ajustés au niveau de l'avant dernier montant latéral inférieur 1612n. Ces collecteurs de frappage présentent une partie plate plus épaisse permettant d'être frappée par un dispositif connu de l'homme du métier pour faire vibrer la nappe 11a et faire tomber les dépôts issus des fumées dans la trémie 18.

En référence aux figures 8 et 9, on s'intéresse à la partie supérieure d'attache 20 de l'ensemble 1116, étant entendu que cette partie supérieure 20 est la même pour chaque ensemble de module et d'échangeur du passage horizontal.

Les nappes 11a du surchauffeur 11 sont surmontées par des collecteurs 11b assurant la distribution en vapeur sèche desdites nappes 11a. Chaque collecteur 11b comporte deux oreilles 11b1, 11b2, chacune en prise dans une biellette 20a1, 20a2 reliée à un tirant 20b1, 20b2 qui est solidarisé à une poutre de support transversale 20c1, 20c2 en le traversant. La partie supérieure de chaque tirant 20b1, 20b2 fait saillie au-dessus de la poutre transversale associée 20c1,20c2. Les extrémités libres opposées de chaque poutre transversale 20c1, 20c2 sont montées sur la face supérieure de deux châssis opposés de support du module 20d,20d2 qui sont eux-mêmes solidarisés au module 16 en étant montés sur les montants longitudinaux opposés supérieurs 1612a, 1612f de ce module 16. Le module 16 et l'échangeur 11 sont ainsi solidarisés entre eux via la pluralité de tirants 20b1,20b2.

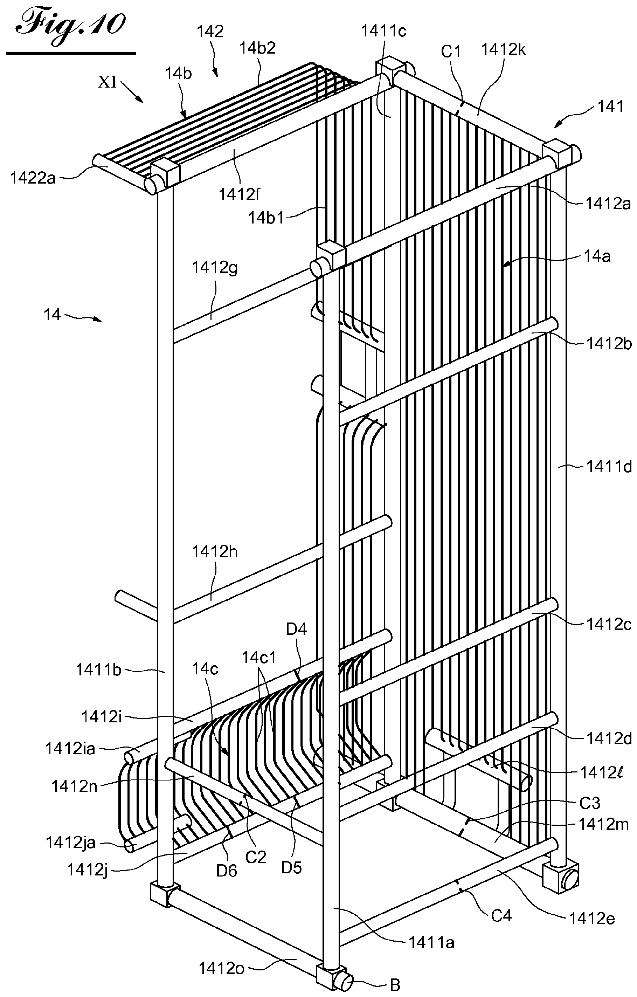

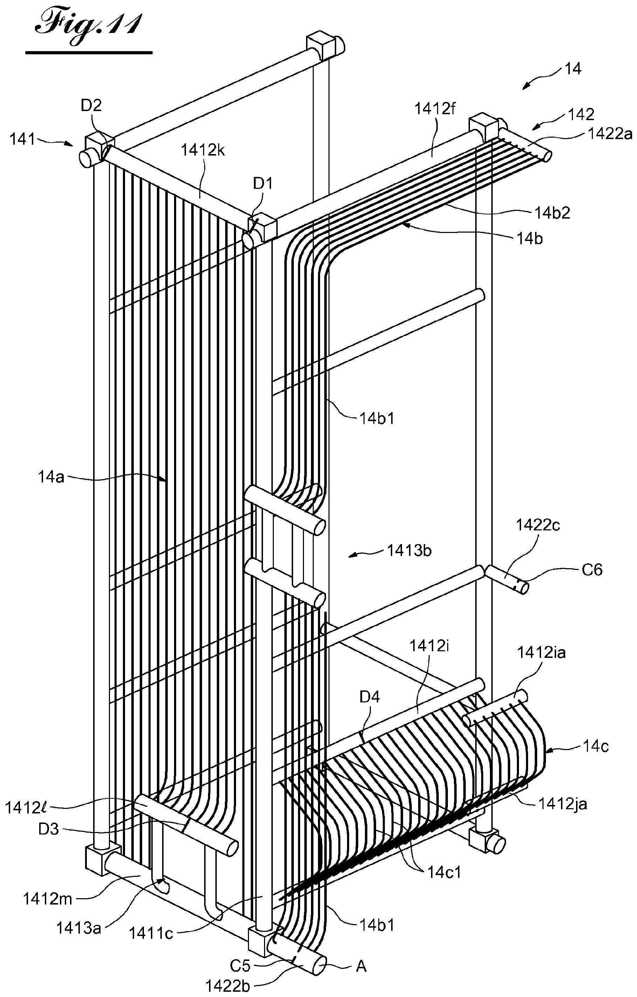

En référence aux figures 10 à 12, un exemple de réalisation d'un module autoportant 14 de surchauffeur gauche haute température 9 ainsi que les flux de circulation de vapeur sèche saturée dans ce module autoportant sont décrits ci-après. Cette description vaut également pour un module autoportant 15 de surchauffeur moyenne température 10. On se réfère d'abord aux figures 10 et 11 pour décrire le module autoportant 14.

Ce module 14 se compose d'une partie principale 141 et d'une partie secondaire adjacente 142. La partie principale 141 comporte quatre montants tubulaires creux verticaux 1411a, 1411b, 1411c, 1411d définissant un parallélépipède de logement du surchauffeur (non représenté) et adapté à la largeur de ce surchauffeur. La partie principale comporte également des montants tubulaires creux horizontaux s'étendant chacun entre deux montants verticaux adjacents et répartis de la façon suivante :
- cinq montants longitudinaux 1412a, 1412b, 1412c, 1412d, 1412e s'étendant longitudinalement entre deux montants verticaux 1411a, 1411d depuis la partie supérieure du module 14 jusqu'à sa partie inférieure,
- cinq montants longitudinaux opposés 1412f, 1412g, 1412h, 1412i, 1412j s'étendant longitudinalement entre les deux montants verticaux opposés 1411b, 1411c depuis la partie supérieure du module jusqu'à sa partie inférieure,
- deux montants latéraux 1412k, 1412m destinés à être disposés du côté extérieur du passage horizontal et qui s'étendent respectivement en partie supérieure et en partie basse du module autoportant 14 entre les deux montants verticaux extérieurs 1411c, 1411d, ainsi qu'un troisième montant latéral 1412l définissant avec le montant latéral inférieur 1412m un cadre 1413a pour recevoir une porte d'accès non représentées au surchauffeur, et
- deux montants latéraux opposés 1412n, 1412o situés en partie basse du module autoportant 14 entre les deux montants verticaux intérieurs opposés 1411a, 1411b.

La partie principale comporte également la première pluralité de tubes écrans 14a qui s'étendent verticalement entre deux les montants latéraux d'extrémités extérieurs 1412k, 1412m et en partie centrale entre deux montant latéraux adjacents 1412k, 1412l.

La partie secondaire adjacente 142 comporte un premier montant horizontal supérieur latéral 1422a situé en partie supérieure du module 14 du côté intérieur du passage horizontal et solidaire de l'extrémité du montant horizontal longitudinal supérieur 1412f de la partie principale 141, et un second montant horizontal inférieur latéral 1422b situé en partie inférieure du module 14 du côté extérieur du passage horizontal et solidaire de l'extrémité inférieure du montant vertical 1411c le plus proche de la partie principale 141.

La partie secondaire 142 comporte également la seconde pluralité de tubes écrans 14b qui s'étendent entre les deux montants latéraux 1422a, 1422b en formant une première partie verticale 14b1 destinée à être agencée du côté extérieur du passage horizontal et une seconde partie horizontale 14b2 destinée à être agencée en partie supérieure du module 14.

Deux cadres 1413a,1413b sont intégrés respectivement au sein de la première pluralité de tubes écrans 14a comme précédemment décrit et au sein de la partie verticale 14b2 de la seconde pluralité de tubes écrans 14b pour recevoir des portes d'accès non représentées au surchauffeur. Le cadre 1413b est agencé au sein de la partie verticale 14b1 de la seconde pluralité de tubes écrans 14b de façon à permettre la circulation verticale du flux de vapeur sèche sur toute la hauteur de ces tubes écrans 14b1.

La partie secondaire adjacente 142 comporte en outre un flanc de refroidissement des fumées 14c présentant de profil une forme de C déporté vers l'extérieur du parallélogramme défini par la partie principale 141, et qui est ménagé en partie inférieure en s'étendant entre un montant longitudinal inférieur 1412j et le montant longitudinal adjacent 1412i. Au niveau de son extrémité du côté intérieur du passage horizontal, le flanc de refroidissement 14c s'étend entre deux montants longitudinaux 1412ja,1412ia de plus faible écartement que les montants longitudinaux 1412j,1412i. Le flanc de refroidissement 14c se compose d'une pluralité de tubes creux 14c1 soudés parallèlement entre eux qui sont configurés pour assurer la circulation de la vapeur sèche alternativement montante et descendante comme il sera vu plus loin.

Il est prévu une entrée A de vapeur sèche dans le module 14 et une sortie B.

Le module autoportant 14 est configuré pour que la vapeur sèche circule dans tous les montants tubulaires, tubes écrans et tubes du flanc de refroidissement tout en limitant la perte de charge. A cet effet, les montants tubulaires creux, les tubes écrans et les tubes du flanc de refroidissement sont en connexion fluidique les uns avec les autres.

A cet effet également, des cloisons et diaphragmes sont montés dans les tubes. Au moins deux diaphragmes et quatre cloisons sont nécessaires selon le débit de vapeur circulant dans le module autoportant. A titre d'exemple, on prévoit six diaphragmes et six cloisons agencés comme suit. Un premier diaphragme C1 est agencé dans le montant tubulaire latéral supérieur 1412k, un deuxième diaphragme C2 est agencé dans le montant tubulaire latéral inférieur opposé 1412n, un troisième diaphragme C3 est agencé dans le montant tubulaire latéral inférieur 1412m, un quatrième diaphragme C4 est agencé dans le montant tubulaire longitudinal inférieur 1412e, un cinquième diaphragme C5 est agencé dans le montant latéral inférieur 1422b de la partie secondaire 142 du module 14 qui est relié à l'entrée A de vapeur sèche, et un sixième diaphragme C6 situé dans le troisième montant latéral 1422c de la partie secondaire 142 du module 14, lequel montant 1422c est relié à un module adjacent.

On se réfère à la figure 6 pour exposer les caractéristiques de ces quatre diaphragmes C1, C2, C3, C4, C5, C6. Comme précédemment, trois caractéristiques sont données à cet effet, respectivement le diamètre Ca du tube dans lequel le diaphragme est monté, le diamètre d'ouverture du diaphragme Cb et la largeur Cc du diaphragme. Le Tableau 2 ci-dessous rapporte en millimètres ces trois caractéristiques pour les quatre diaphragmes C1, C2, C3, C4, C5, C6.

**Tableau 2**

| | C1 | C2 | C3 | C4 | C5 | C6 |
|---|---|---|---|---|---|---|
| Ca | 123,9 | 89,3 | 174,7 | 89,3 | 174,7 | 76,3 |
| Cb | 60 | 50 | 60 | 40 | 100 | 30 |
| Cc | 6 | 6 | 6 | 6 | 6 | 6 |

L'agencement des six cloisons est comme suit. Une première cloison D1 est agencée en partie supérieure du module 14 à la jonction des trois montants tubulaires 1411c, 1412f, 1412k. Une deuxième cloison D2 est agencée en partie supérieure du module 14 à la jonction des trois montants tubulaires 1411d, 1412a, 1412k. Une troisième cloison D3 est agencée en partie inférieure du module 14 au niveau d'un montant latéral 1412l. Les trois autres cloisons D4, D5, D6 sont situées au niveau du flanc de refroidissement 14c. La quatrième cloison D4 est agencée approximativement au milieu du montant supérieur 1412p du flanc de refroidissement 14c. Le montant inférieur 1412j du flanc de refroidissement 14c comporte la cinquième D5 et la sixième D6 cloison répartis comme illustré sur la figure 10.

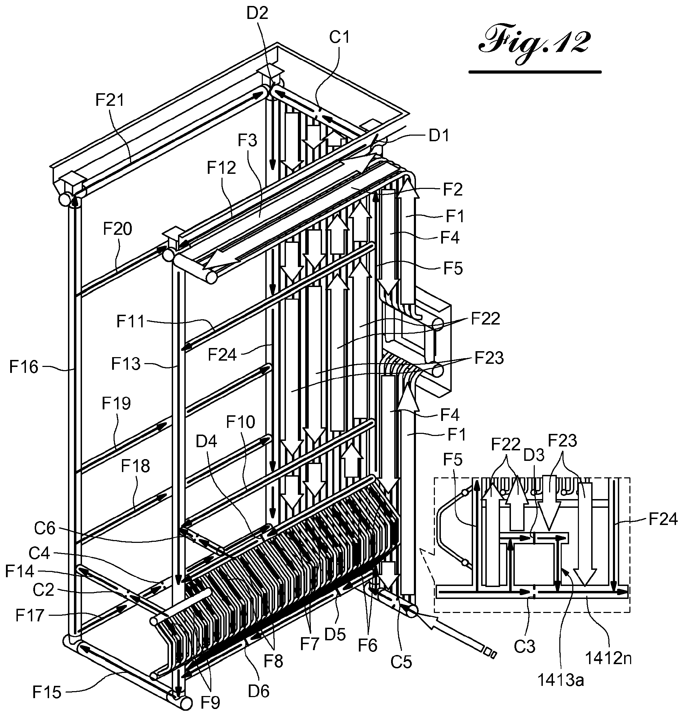

On décrit en référence à la figure 12 le parcours des flux de vapeur sèche saturée dans le module autoportant 14 de l'invention depuis l'entrée A jusqu'à la sortie B. Sur cette figure et pour des raisons de clarté, les références des montants tubulaires et des tubes du flanc de refroidissement n'ont pas été reportés. On a principalement identifié les flux, les diaphragmes et les cloisons. On se reporte aux figures 10 et 11 pour suivre les références faites aux montants tubulaires et aux tubes du flanc de refroidissement dans la description de la figure 12 qui suit.

La vapeur sèche est introduite dans le module 14 provient de la sortie B du module 13 (figure 7) et est ainsi introduit en A au niveau du montant latéral 1422b de la partie secondaire 142 et circule selon la flèche F1 dans une partie de la partie verticale 14b1 de la seconde pluralité de tubes écrans 14b, puis selon la flèche F2 dans une partie de la partie horizontale 14b2 de la seconde pluralité de tubes écrans 14b avant de faire demi-tour dans cette partie horizontale 14b2 (F3) et dans cette partie verticale 14b1 (F4) jusqu'au montant latéral inférieur 1422b dans lequel la vapeur circule selon la flèche F3. La vapeur est ensuite distribuée via le montant 1411c dans le flanc de refroidissement 14c, en circulant alternativement de façon ascendante selon les flèches F6, F8 et descendante selon les flèches F7, F9 du fait du positionnement des trois cloisons D4, D5, D6 ainsi que dans les montants longitudinaux inférieur 1412j et supérieur 1412p du flanc de refroidissement 14c. La vapeur sèche rejoint alors la partie inférieure du montant vertical 1411b et le flux F13 décrit plus loin.

La vapeur qui arrive du flux F4 circule est également distribuée dans le montant latéral inférieur 1412m de la partie principale 13a du module 13 vers la sortie B, et dans le montant vertical 1411c selon la flèche F5 puis dans le montant supérieur longitudinal 1412f selon la flèche F12 avant de descendre dans le montant vertical 1411b selon la flèche F13. En outre, depuis la circulation selon la flèche F5, la vapeur circule dans les deux montants longitudinaux 1412g, 1412h selon les flèches respectives F10, F11, en alimentant le flux F13 du montant vertical 1411b.

La vapeur sèche circule alors dans les deux montants latéraux inférieurs 1412n,1412o selon les flèches F14, F15 avant de remonter dans le montant vertical 1411a selon la flèche F16 puis dans le montant longitudinal supérieur 1412a selon la flèche 21 avant de redescendre dans le montant vertical 1411d (flèche 24) vers la sortie B (non visible). En outre, depuis la circulation selon la flèche F16, la vapeur circule dans les quatre montants longitudinaux 1412e, 1412d, 1412c, 1412b selon les flèches respectives F17, F18, F19, F20 en alimentant le flux F24 du montant vertical 1411 d.

Enfin, depuis la circulation dans le montant latéral inférieur 1412n et grâce au diaphragme C3, la vapeur circule dans le montant latéral inférieur 1312l, et grâce à la cloison D3, la vapeur circule selon un flux ascendant (flèche 22) et descendant (flèche 23) dans les tubes écrans 14a de la partie principal 14 avant de rejoindre, via respectivement le montant latéral supérieur 1412k, et le montant latéral inférieur 1412l, le montant vertical 1411d et le flux de la flèche F24 vers la sortie B.

Les agencements des montants tubulaires, des tubes écrans, des tubes du flanc de refroidissement ainsi que les cloisons et diaphragmes permettent de limiter la perte de charge de la vapeur sèche circulant dans le module 14 à 0,45 Bar.

On comprend que le passage vertical de la chaudière est ainsi constitué d'une pluralité d'ensembles formés par un module de l'invention et l'échangeur associé (évaporateur droite et gauche, surchauffeur haute température droite et gauche, surchauffeur moyenne température droite et gauche, surchauffeurs basse température droite et gauche), les modules étant en connexion fluidique les uns avec autres. Pour l'ensemble du passage horizontal ainsi constitué, la perte de charge totale avant l'entrée de la vapeur dans les surchauffeurs basse température est d'environ 2,5 bar.

Outre la faible perte de charge engendrée par la configuration et l'agencement des modules de l'invention, l'utilisation de vapeur sèche prélevée en partie supérieure du ballon de la chaudière avant l'entrée dans le module du vaporisateur permet de conférer à la pluralité de modules de l'invention du passage horizontal en connexion les uns avec les autres une fonction de surchauffeur présentant un gain de surchauffe de 20°C environ de la vapeur sèche saturée avant son entrée dans les surchauffeurs basse température.

Par ailleurs, le caractère indépendant de chaque ensemble de module et échangeur associé apporte une meilleure efficacité des opérations de frappage réalisées au niveau des collecteurs de frappage pour faire tomber les dépôts des fumées. En outre, le réglage indépendant de chaque nappe d'échangeur à travers les tirants qui sont intégrés à l'ensemble formé par le module et l'échangeur est également un avantage de l'invention.

Au surplus des avantages déjà présentés, les ensembles formés par chacun des modules avec l'échangeur associé permet un montage facilité et moins couteux du passage horizontal de la chaudière. Ces ensembles permettent également de faciliter la maintenance en offrant la possibilité d'effectuer un démontage des échangeurs pas le bas ou par le haut du passage horizontal. On décrit ci-après un exemple de procédé de montage du passage horizontal d'une chaudière, un exemple de procédé de démontage et remontage pour maintenance par le bas, et un exemple de procédé de démontage et remontage pour maintenance par le haut.

En référence à la figure 13, le montage d'un passage horizontal 5 de chaudière 1 est réalisé de la façon suivante. Les ensembles gauche et droite formés par les modules et leurs échangeurs associés sont livrés sur site avec des oreilles de levage. Chaque ensemble présente une masse d'environ 20 tonnes. Les ensembles sont levés un à un et mis en place en position définitive dans la charpente sur des boîtes à billes. Sur la figure 13, trois ensembles 813, 914 respectivement deux ensembles 813 droite et gauche de module 13 et vaporisateur 8, et l'ensemble droit 914 de module 14 et surchauffeur haute température 9 sont déjà en place dans le passage horizontal 5, tandis que l'ensemble gauche 914 de module 14 et surchauffeur haute température 9 est représenté en cours de descente pour son installation. Une fois les ensembles positionnés, les trémies 18 sont boulonnées à chaque ensemble 813,914 associé et un cordon de soudure d'étanchéité sur l'extérieur des brides assure l'étanchéité. Les liaisons entre les ensembles sont réalisées au fur et à mesure de la mise à place de chacun des ensembles, notamment après vérification de leur verticalité. Contrairement à une installation de l'art antérieur qui nécessite l'installation d'une boite écran et de nombreuses soudures, l'installation du passage horizontal par l'installation successive des ensembles de l'invention comportant les tubes écrans, permet de réduire les coûts de montage de ce passage horizontal d'environ 35%.

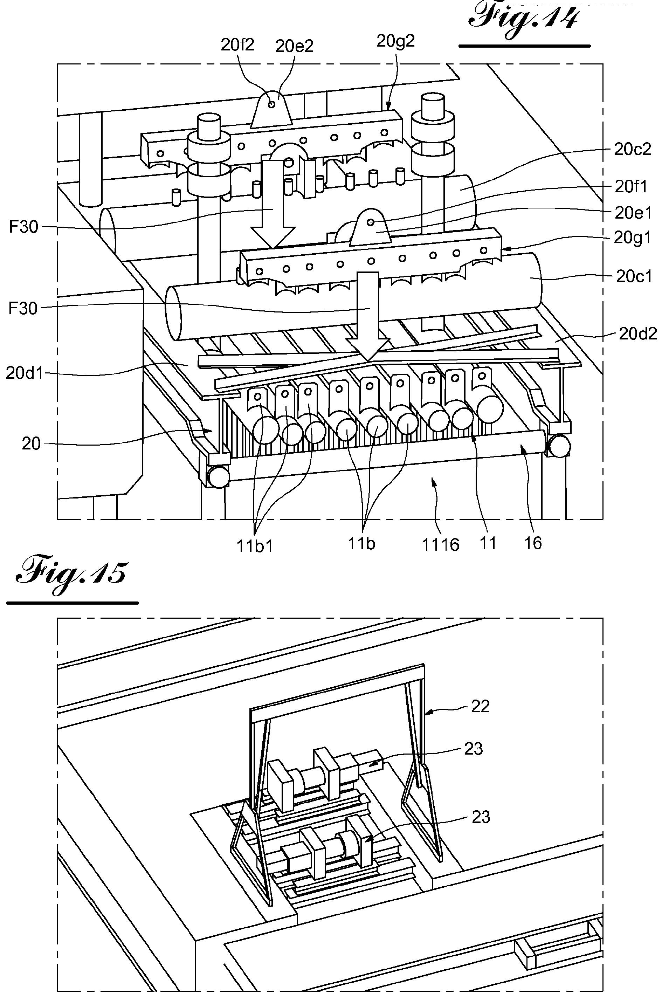

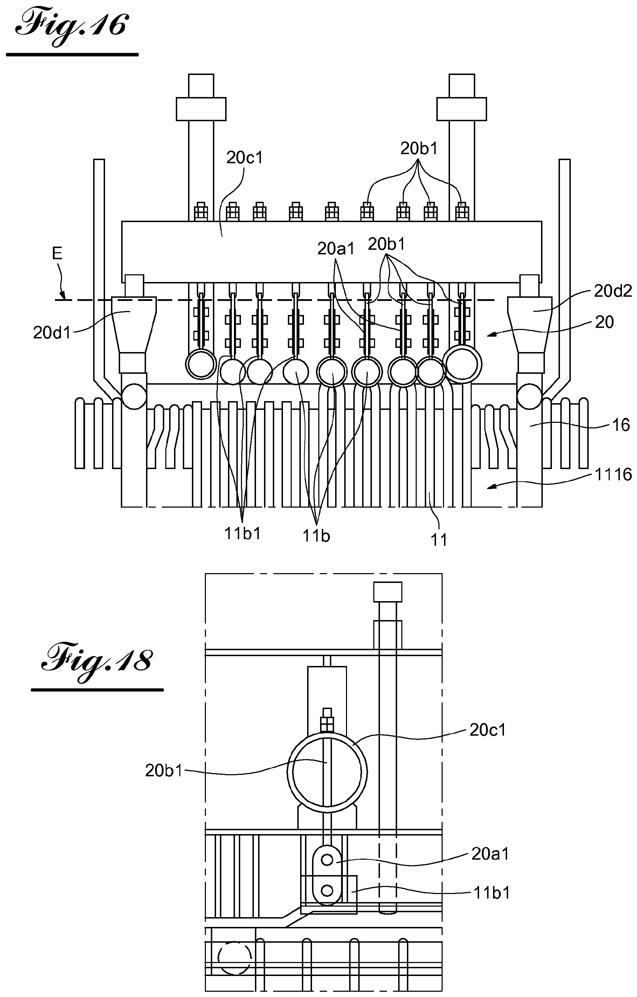

En référence aux figures 14 à 18, les opérations de démontage et de remontage pour maintenance par le bas d'un échangeur sont réalisées de la façon suivante. On libère la partie inférieure de l'ensemble, par exemple l'ensemble 1116, notamment par découpage des tuyauteries de purge associées à l'ensemble 116 ainsi que les guides des collecteurs de frappage. En partie supérieure, les tuyauteries, évents et purges situés sur le toit de la chaudière au-dessus des échangeurs sont retirés et l'enveloppe supérieure de l'échangeur est également retirée pour accéder à la partie supérieure d'attache 20 par exemple de l'ensemble 1116. En référence à la figure 16, on procède alors à la découpe des tirants 20b1, 20b2 après avoir solidarisé l'échangeur à un câble de poulie, ce dont il résulte la désolidarisation du module 16 du surchauffeur 11. En référence à la figure 14, on installe deux poutres de manutention 20g1, 20g2 sur les oreilles 11b1, 11b2 à présent libres des collecteurs 11b. Les poutres 20g1, 20g2 sont représentées sur la figure 14 en cours d'installation selon les flèches F30 sur les oreilles 11b1, 11b2 des collecteurs 11b. Chaque poutre 20g1, 20g2 comporte elle-même une oreille associée 20e1, 20e2 munie d'un orifice 20f1, 20f2 qui permet d'assurer la descente du surchauffeur 16 via un système de portique 22 et de poulie 23 représenté sur la figure 15, étant entendu que le câble de chaque poulie 23 passe dans l'orifice 20f1,20f2 de l'oreille 20e1,20e2 de la poutre associée 20g1,20g2.

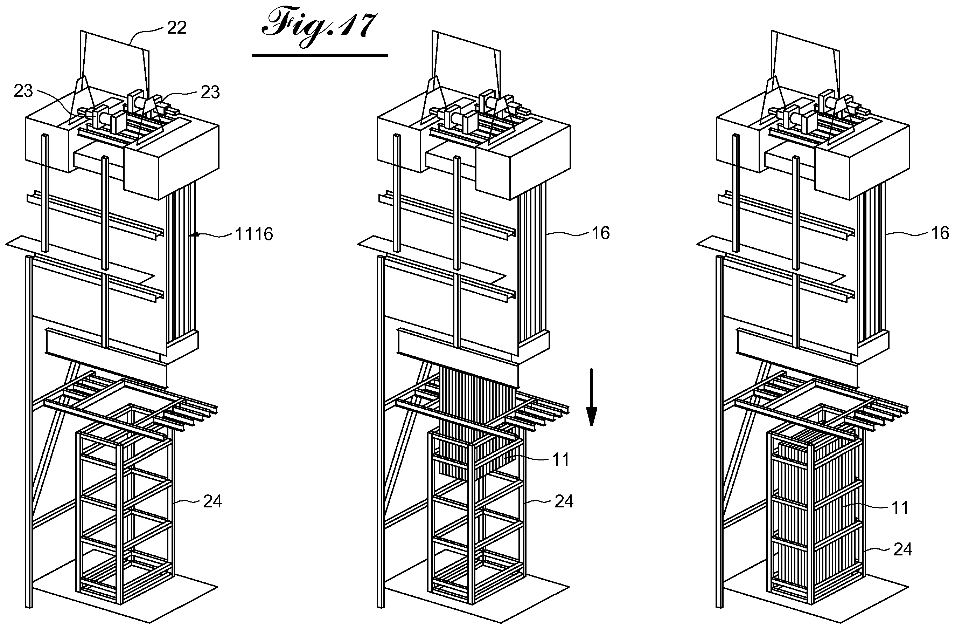

En référence à la figure 17, un échafaudage 24 est installé sous le passage horizontal pour réceptionner le surchauffeur 16, et plus précisément sous l'ensemble 1116 pour lequel l'échangeur 16 nécessite une maintenance. Le surchauffeur 11 est alors descendu dans l'échafaudage 24 par le système de poulie 23. La maintenance du surchauffeur 11 et/ou du module 16 peut alors être réalisée. En parallèle et en référence à la figure 18, de nouveaux tirants 20b1 sont installés en étant solidarisés à la poutre transversale associée 20c1,20c2. Une fois la maintenance réalisée, le surchauffeur 16 est repositionné dans le module associé 11, des goupilles non représentées sont installées pour connecter l'oreille 11b1 du collecteur 11b (non représenté) des nappes de surchauffeur à la biellette 20a1 et ainsi solidariser le surchauffeur 11 au module 16. La remise en place du collecteur de frappage, de l'enveloppe supérieure, de la trémie, des tuyauteries de purge et du système de frappage est alors effectuée. Les tuyauteries, purges et évents en partie supérieure peuvent être remis en place par soudage.

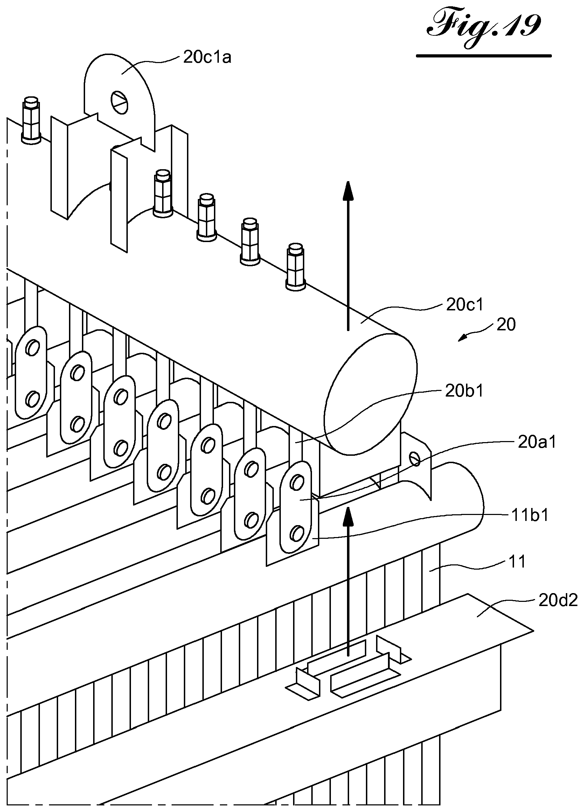

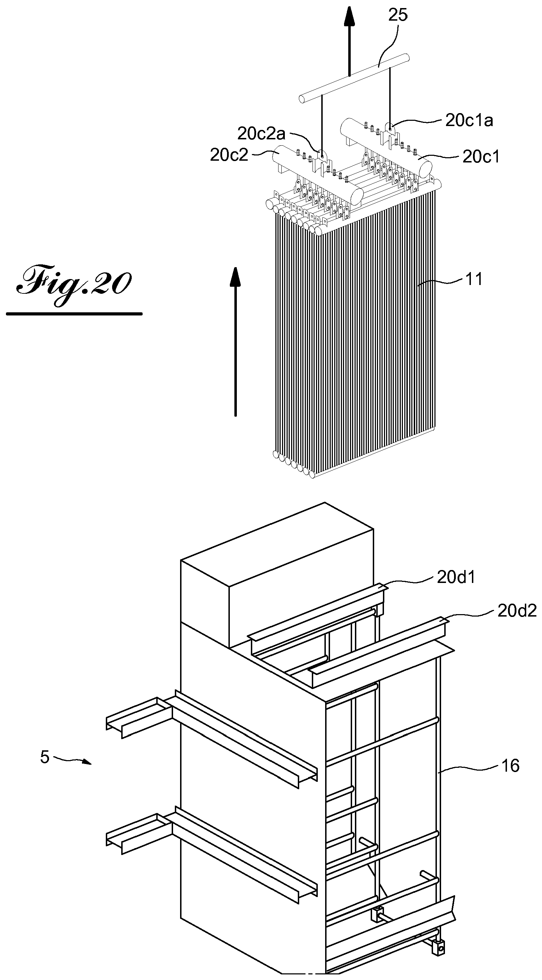

En référence aux figures 19 et 20, les opérations de démontage et de remontage pour maintenance par le haut d'un échangeur sont réalisées de la façon suivante. Le système de frappage des échangeurs est démonté et stocké. Les tuyauteries, évents et purges situés sur le toit de la chaudière au-dessus des échangeurs sont retirés. L'enveloppe supérieure de l'échangeur est retirée pour accéder à la partie supérieure de l'échangeur. Les différentes tuyauteries de purge associées à l'échangeur et au module ainsi que les collecteurs et tubes d'évent situés en partie haute sont découpées. Une grue est montée pour assurer le levage de l'échangeur. En référence à la figure 19, il s'agit pour cette opération de démontage de désolidariser l'échangeur 11 des deux châssis opposés de support de module 20d1, 20d2. Pour ce faire, les extrémités libres opposées des poutres de support transversales 20c1, 20c2 sont désolidarisées des châssis de support de module 20d1,20d2. Par ailleurs, chaque poutre de support transversale 20c1, 20c2 comporte une oreille de levage 20c1a comprenant un orifice en permettant d'assurer le levage des poutres de support transversales 20c1, 20c2 ainsi que de l'échangeur associé puisque dans cette opération de démontage, les tirants 20b1 sont laissés en place de sorte que les poutres de support transversales 20c1, 20c2 sont toujours solidarisées à l'échangeur associé.

En référence à la figure 20, l'échangeur 11 peut ainsi être retiré par le haut du passage horizontal 5 (dont une partie seulement est représentée sur la figure 20), via un portique de levage 25 relié aux oreilles 20c1a, 20c2a des poutres de support transversales 20c1, 20c2. La maintenance du surchauffeur 11 et/ou du module 16 peut alors être réalisée. Une fois la maintenance réalisée, le surchauffeur 16 est repositionné dans le module associé 11, et les extrémités des poutres de support transversales 20c1, 20c2 sont de nouveau solidarisées aux châssis de support de module 20d1, 20d2 pour solidariser le surchauffeur 11 au module 16. La remise en place du collecteur de frappage, de l'enveloppe supérieure, de la trémie, des tuyauteries de purge et du système de frappage est alors effectuée. Les tuyauteries, purges et évents en partie supérieure peuvent être remis en place par soudage.

## Revendications

1. Module autoportant destiné à être assemblé autour d'un échangeur thermique de chaudière de type comportant un passage horizontal, lequel module (13, 14, 15, 16, 17) comporte au moins un montant tubulaire creux (1311a-1311d, 1312a-1312p ; 1411a-1411d, 1412a-1412o) destiné à s'étendre le long des nappes (11a) dudit échangeur (11) et qui est en connexion fluidique avec la partie supérieure du ballon de la dite chaudière (1) pour permettre la circulation de vapeur sèche saturée dans ledit montant (1311a-1311d, 1312a-1312p ; 1411a-1411d, 1412a-1412o), le module autoportant comportant une partie principale (131,141) qui comprend au moins quatre montants tubulaires creux verticaux (1311a-1311d; 1411a-1411d) définissant un parallélépipède de logement dudit échangeur (8, 9, 10, 11, 12) et une pluralité de montants tubulaires creux horizontaux (1312a-1312p ; 1412a-1412o) s'étendant entre deux montants verticaux adjacents (1311a-1311d ; 1411a-1411d) et en connexion fluidique avec ces montants (1311a-1311d ; 1411a-1411d ), au moins une entrée de vapeur sèche saturée (A) reliée à la partie supérieure du ballon de la chaudière (1), au moins une sortie de vapeur sèche saturée (B), les montants tubulaires verticaux (1311a-1311d; 1411a-1411d) et horizontaux (1312a-1312p ; 1412a-1412o) étant configurés pour assurer la circulation de la vapeur sèche saturée dans tous les montants (1311a-1311d, 1312a-1312p; 1411a-1411d, 1412a-1412o) de la partie principale (131,141),le module autoportant comportant en outre une première pluralité de tubes écrans (13a,14a) destinés à être situés du coté extérieur du passage horizontal (5) de la chaudière (1), qui sont agencés verticalement entre deux montants tubulaires verticaux (1311c, 1311d ; 1411c, 1411d) de la partie principale (131, 141) du module (13, 14, 15, 16, 17), et qui sont en connexion fluidique la partie principale (131, 141) du module (13, 14, 15, 16, 17), le module autoportant comportant une partie secondaire (132, 142) adjacente à la partie principale (131, 141) en s'étendant latéralement à l'extérieur de ladite partie principale (131, 141) et comportant au moins un montant supérieur tubulaire creux (1322a, 1422a) et un montant inférieur tubulaire creux (1322b, 1422b) qui sont en connexion fluidique avec la partie principale (131, 141) du module (13, 14, 15, 16, 17) et entre lesquels s'étendent une seconde pluralité de tubes écrans (13b, 14b) dont une première partie (13b1, 14b1) est agencée verticalement adjacente et dans le même plan que la première pluralité de tubes écrans verticaux (13a, 14a), et une seconde partie (13b2,14b2) est agencée horizontalement en partie supérieure du module (13, 14), laquelle seconde pluralité de tubes écrans (13b, 14b) est en connexion fluidique avec les montants supérieur (1322a, 1422a) et inférieur (1322b, 1422b) de la partie secondaire (132, 142) du module (13, 14).

2. Module autoportant selon la revendication précédente, **caractérisé en ce qu'**il comporte un flanc de refroidissement des fumées (13c, 14c) ménagé en partie inférieure de la partie secondaire (132, 142) du module (13, 14) et comportant une pluralité de tubes creux (13c1, 14c1) soudés parallèlement ensemble, configurés pour assurer une circulation de la vapeur sèche saturée alternativement montante et descendante, et en connexion fluidique avec la partie principale (131, 141) du module (13, 14).

3. Module autoportant selon la revendication précédente, **caractérisé en ce que** le flanc de refroidissement (13c) est plan et agencé obliquement vers le haut depuis un montant inférieure (1312j) de la partie principale (131) du module (13).

4. Module autoportant selon la revendication 2, **caractérisé en ce que** le flanc de refroidissement (14c) présente un profil en forme de C qui s'étend extérieurement à la partie principale (141) du module (14) depuis un montant inférieur (1412j) de ladite partie principale (141) du module (14).

5. Module autoportant selon l'une quelconque des revendications précédentes, **caractérisé en ce qu'**il comporte une pluralité de cloisons (D1-D6) et de diaphragmes (C1-C4 ; C1-C6) agencés dans au moins certains montants creux des parties principale (131,141) et secondaire (132,142) du module (13,14).

6. Ensemble formé par un échangeur thermique de type vaporisateur ou surchauffeur et par un module autoportant selon l'une quelconque des revendications 1 à 5, le module autoportant étant agencé autour de l'échangeur thermique.

7. Ensemble selon la revendication précédente dans sa dépendance avec la revendication 3, **caractérisé en ce que** l'échangeur est un vaporisateur (8).

8. Ensemble selon la revendication 6 dans sa dépendance avec la revendication 4, **caractérisé en ce que** l'échangeur est un surchauffeur haute température (9) ou moyenne température (10).

9. Ensemble selon l'une quelconque des revendications 6 à 8, **caractérisé en ce que** l'échangeur thermique (8, 9, 10, 11, 12) et le module autoportant associé (13, 14, 15, 16, 17) sont solidarisés entre eux au moyen d'une pluralité de tirants (20b1, 20b2) solidaires de la partie supérieure des nappes de l'échangeur thermique via une même pluralité de biellettes (20a1, 20a2), et d'au moins une poutre transversale (20d1, 20d2) solidaire du dit module autoportant (13, 14, 15, 16, 17).

10. Chaudière comportant un passage horizontal (5), lequel passage horizontal comprend une pluralité d'ensembles selon la revendication 6, les modules autoportants (13, 14, 15, 16, 17) de chacun desdits ensembles étant en connexion fluidique et les première (13a, 14a, 15a, 16a, 17a) et seconde (13b, 14b, 15b, 16b, 17b) pluralités de tubes écrans de chacun desdits ensembles formant une boîte écran des échangeurs (8, 9, 10, 11, 12).

11. Chaudière selon la revendication précédente, **caractérisée en ce que** le passage horizontal (5) comporte au moins, en suivant le sens des fumées, deux ensembles respectivement gauche et droit selon la revendication 7 dans lesquels l'échangeur est un vaporisateur (8), deux ensembles respectivement gauche et droit selon la revendication 8 dans lesquels le surchauffeur est un surchauffeur haute température (9) , deux ensembles respectivement gauche et droit selon la revendication 8 dans lesquels le surchauffeur est un surchauffeur moyenne température (10), deux ensembles selon la revendication 6 ensemble la revendication 1 pour lesquels le module autoportant (16, 17) ne comporte pas de flanc de refroidissement, dans lesquels l'échangeur est un surchauffeur basse température (11, 12).

12. Procédé de montage du passage horizontal d'une chaudière selon les revendications 10 et 11, comportant au moins les étapes d'installation successive de chacun des ensembles constituant le passage horizontal, ces étapes comprenant un levage et une mise en place en position définitive des ensemble un à un, des liaisons entre les ensembles étant réalisées au fur et à mesure de la mise à place de chacun des ensembles.

13. Procédé de démontage et de remontage par le bas d'un échangeur monté dans le passage horizontal d'une chaudière selon l'une quelconque des revendications 10 ou 11, le procédé comportant au moins les étapes de :
- libération de la partie inférieure dudit échangeur (8, 9, 10, 11, 12) notamment par le démontage des éléments de la chaudière , notamment de la trémie (18), qui sont solidaires et/situés au niveau de ladite partie inférieure,
- libération de la partie supérieure dudit échangeur (8, 9, 10, 11, 12) notamment par la découpe des tirants (20b1, 20b2) solidaires de la partie supérieure des nappes de l'échangeur (8, 9, 10, 11, 12) et d'au moins une poutre transversale (20d1, 20d2) solidaire du module autoportant associé (13, 14, 15, 16, 17) audit échangeur (8 ,9 10 11,12),
- descente de l'échangeur (8, 9, 10, 11, 12) précédemment libéré par un dispositif adapté jusqu'à un chantier de réception (24) disposé sous le module autoportant associé (13, 14, 15, 16, 17) ,
- une fois les opérations d'entretien réalisées, levage de l'échangeur (8, 9, 10, 11, 12) dans le module autoportant associé (13, 14, 15, 16, 17) par un dispositif adapté,
- installation de nouveaux tirants (20b1, 20b2), et
- montage et mise en place des éléments associés au fonctionnement de l'échangeur (8, 9, 10, 11, 12).

14. Procédé de démontage et de remontage par le haut d'un échangeur monté dans le passage horizontal d'une chaudière selon l'une quelconque des revendications 10 ou 11, le procédé comportant au moins les étapes de :
- libération de la partie inférieure dudit échangeur (8, 9, 10, 11, 12) notamment par le démontage des éléments de la chaudière (1), notamment de la trémie (18), qui sont solidaires et/situés au niveau de ladite partie inférieure,
- libération de la partie supérieure dudit échangeur (8, 9, 10, 11, 12) notamment par la désolidarisation de la ou des poutres transversales (20d10, 20d2) du module autoportant (13, 14, 15, 16, 17), lesquelles poutres transversales (20d1, 20d2) restent solidaires de l'échangeur, et
- levage de l'échangeur (8, 9, 10, 11, 12) précédemment libéré par un dispositif adapté jusqu'à un chantier de réception,
- une fois les opérations d'entretien réalisées, descente de l'échangeur (8, 9, 10, 11, 12) dans le module autoportant (13, 14, 15, 16, 17) associé par un dispositif adapté,
- solidarisation aux poutres transversales (20d1, 20d2) du module autoportant associé (13, 14, 15, 16, 17), et
- montage et mise en place des éléments associés au fonctionnement de l'échangeur (8, 9, 10, 11, 12).

## Patentansprüche

1. Selbsttragendes Modul, das dazu bestimmt ist, um einen Wärmetauscher für Heizkessel mit einem horizontalen Durchgang herum montiert zu werden, wobei das Modul (13, 14, 15, 16, 17) mindestens eine hohle rohrförmige Stütze (1311a-1311d, 1312a-1312p; 1411a-1411d, 1412a-1412o) umfasst, die dazu bestimmt ist, sich entlang der Matten (11a) des Wärmetauschers (11) zu erstrecken, und die in Fluidverbindung mit dem oberen Teil des Heizkessels (1) steht, um die Zirkulation von gesättigtem Trockendampf in die Stütze (1311a-1311d, 1312a-1312p; 1411a-1411d, 1412a-1412o) zu ermöglichen, wobei das selbsttragende Modul einen Hauptteil (131, 141) aufweist, der mindestens vier vertikale hohle rohrförmige Stützen (1311a-1311d ; 1411a-1411d) umfasst, die ein Parallelepiped zur Aufnahme des Wärmetauschers (8, 9, 10, 11, 12) definieren, sowie eine Vielzahl von horizontalen hohlen rohrförmigen Stützen (1312a-1312p; 1412a-1412o), die sich zwischen zwei benachbarten vertikalen Stützen (1311a-1311d; 1411a-1411d) und in Fluidverbindung mit diesen Stützen (1311a-1311d; 1411a-1411d) erstrecken, wobei mindestens ein Einlass für gesättigten Trockendampf (A), der mit dem oberen Teil des Heizkessels (1) verbunden ist, mindestens ein Auslass für gesättigten Trockendampf (B), die vertikalen (1311a-1311d; 1411a-1411d) und horizontalen (1312a-1312p; 1412a-1412o) rohrförmigen Stützen so gestaltet sind, dass sie die Zirkulation des gesättigten Trockendampfes durch alle Stützen (1311a-1311d, 1312a-1312p; 1411a-1411d, 1412a-1412o) des Hauptteils (131, 141) ermöglichen, wobei das selbsttragende Modul außerdem eine erste Vielzahl von Abschirmrohren (13a, 14a) umfasst, die dazu bestimmt sind, sich auf der Außenseite des horizontalen Durchgangs (5) des Heizkessels (1) zu befinden, und die vertikal zwischen zwei vertikalen rohrförmigen Stützen (1311c, 1311d ; 1411c, 1411d) des Hauptteils (131, 141) des Moduls (13, 14, 15, 16, 17) angeordnet sind und die in Fluidverbindung mit dem Hauptteil (131, +141) des Moduls (13, 14, 15, 16, 17) stehen, wobei das selbsttragende Modul einen Nebenbereich (132, 142) aufweist, der an dem Hauptteil (131, 141) angrenzt, indem er sich seitlich außerhalb des Hauptteils (131, 141) erstreckt und mindestens eine hohle rohrförmige obere Stütze (1322a, 1422a) und eine hohle rohrförmige untere Stütze (1322b, 1422b) aufweist, die in Fluidverbindung mit dem Hauptteil (131, 141) des Moduls (13, 14, 15, 16, 17) stehen, und zwischen denen sich eine zweite Vielzahl von Abschirmrohren (13b, 14b) erstreckt, von denen ein erster Teil (13b1, 14b1) vertikal benachbart und in der gleichen Ebene wie die erste Vielzahl von vertikalen Abschirmrohren (13a, 14a) angeordnet ist, und ein zweiter Teil (13b2,14b2) horizontal im oberen Teil des Moduls (13, 14) angeordnet ist, wobei die zweite Vielzahl von Abschirmrohren (13b, 14b) in Fluidverbindung mit den oberen (1322a, 1422a) und unteren (1322b, 1422b) Stützen des Nebenbereichs (132, 142) des Moduls (13, 14) steht.

2. Selbsttragendes Modul nach dem vorhergehenden Anspruch, **dadurch gekennzeichnet, dass** es eine Rauchgaskühlflanke (13c, 14c) umfasst, die im unteren Teil des Nebenbereichs (132, 142) des Moduls (13, 14) angeordnet ist und eine Vielzahl von parallel zusammengeschweißten hohlen Rohren (13c1, 14c1) umfasst, die so gestaltet sind, dass sie eine abwechselnd aufsteigende und absteigende Zirkulation von gesättigtem Trockendampf gewährleisten, und in Fluidverbindung mit dem Hauptteil (131, 141) des Moduls (13, 14) stehen.

3. Selbsttragendes Modul nach dem vorhergehenden Anspruch, **dadurch gekennzeichnet, dass** die Kühlflanke (13c) eben ist und schräg nach oben von einer unteren Stütze (1312j) des Hauptteils (131) des Moduls (13) ausgehend angeordnet ist.

4. Selbsttragendes Modul nach Anspruch 2, **dadurch gekennzeichnet, dass** die Kühlflanke (14c) ein C-förmiges Profil aufweist, das sich außerhalb des Hauptteils (141) des Moduls (14) von einer unteren Stütze (1412j) des Hauptteils (141) des Moduls (14) ausgehend erstreckt.

5. Selbsttragendes Modul nach einem der vorhergehenden Ansprüche, **dadurch gekennzeichnet, dass** es eine Vielzahl von Trennwänden (D1-D6) und Blenden (C1-C4; C1-C6) umfasst, die in mindestens einigen Hohlstützen der Haupt- (131, 141) und Nebenteile (132, 142) des Moduls (13, 14) angeordnet sind.

6. Einheit aus einem Wärmetauscher vom Verdampfer- oder Überhitzertyp und einem selbsttragenden Modul nach einem der Ansprüche 1 bis 5, wobei das selbsttragende Modul um den Wärmetauscher herum angeordnet ist.

7. Einheit nach dem vorhergehenden Anspruch in Abhängigkeit von Anspruch 3, **dadurch gekennzeichnet, dass** der Austauscher ein Verdampfer (8) ist.

8. Einheit nach Anspruch 6 in Abhängigkeit von Anspruch 4, **dadurch gekennzeichnet, dass** der Wärmetauscher ein Hochtemperatur- (9) oder Mitteltemperatur- (10) Überhitzer ist.

9. Einheit nach einem der Ansprüche 6 bis 8, **dadurch gekennzeichnet, dass** der Wärmetauscher (8, 9, 10, 11, 12) und das zugehörige selbsttragende Modul (13, 14, 15, 16, 17) mittels einer Vielzahl von Zugstangen (20b1, 20b2) miteinander verbunden sind, die über eine gleiche Vielzahl von Schwingarmen (20a1, 20a2) fest mit dem oberen Teil der Matten des Wärmetauschers verbunden sind, und durch mindestens einen Querträger (20d1, 20d2), der fest mit dem selbsttragenden Modul (13, 14, 15, 16, 17) verbunden ist.

10. Heizkessel mit einem horizontalen Durchgang (5), bei dem der horizontale Durchgang eine Vielzahl von Einheiten nach Anspruch 6 umfasst, wobei die selbsttragenden Module (13, 14, 15, 16, 17) jeder der Einheiten in Fluidverbindung stehen und die erste (13a, 14a, 15a, 16a, 17a) und zweite (13b, 14b, 15b, 16b, 17b) Vielzahl von Abschirmrohren jeder der Einheiten einen Abschirmkasten der Wärmetauscher (8, 9, 10, 11, 12) bilden.

11. Heizkessel nach dem vorhergehenden Anspruch, **dadurch gekennzeichnet, dass** der horizontale Durchgang (5) mindestens, der Richtung der Rauchgase folgend, zwei Einheiten jeweils links und rechts nach Anspruch 7 umfasst, in denen der Wärmetauscher ein Verdampfer (8) ist, zwei Einheiten jeweils links und rechts nach Anspruch 8, in denen der Überhitzer ein Hochtemperatur-Überhitzer (9) ist, zwei Einheiten jeweils links und rechts nach Anspruch 8, bei denen der Überhitzer ein Mitteltemperatur-Überhitzer (10) ist, zwei Einheiten nach Anspruch 6 zusammen Anspruch 1, bei denen das selbsttragende Modul (16, 17) keine Kühlflanke hat, bei denen der Wärmetauscher ein Niedertemperatur-Überhitzer (11, 12) ist.

12. Verfahren zur Montage des horizontalen Durchgangs eines Heizkessels nach den Ansprüchen 10 und 11, das mindestens die Schritte der aufeinanderfolgenden Installation jeder der Einheiten, die den horizontalen Durchgang bilden, umfasst, wobei diese Schritte ein nacheinander folgendes Anheben und Einsetzen in die endgültige Position der einzelnen Einheiten umfassen, wobei die Verbindungen zwischen den Einheiten nach und nach während des Einsetzens jeder der Einheiten hergestellt werden.

13. Verfahren zum Zerlegen und Wiederzusammenbauen eines im horizontalen Durchgang eines Heizkessels nach einem der Ansprüche 10 oder 11 montierten Wärmetauschers von unten, wobei das Verfahren mindestens die folgenden Schritte umfasst:
- Freilegen des unteren Teils des Wärmetauschers (8, 9, 10, 11, 12), insbesondere durch die Demontage der Elemente des Heizkessels, insbesondere des Trichters (18), die fest mit dem unteren Teil verbunden und in diesem Bereich angeordnet sind,
- Freilegen des oberen Teils des Wärmetauschers (8, 9, 10, 11, 12) insbesondere durch das Abschneiden der Zugstangen (20b1, 20b2), die fest mit dem oberen Teil der Matten des Wärmetauschers (8, 9, 10, 11, 12) verbunden sind, und von mindestens einem Querträger (20d1, 20d2), der fest mit dem selbsttragenden Modul (13, 14, 15, 16, 17) verbunden ist, das dem Wärmetauscher (8, 9, 10, 11, 12) zugeordnet ist,
- Absenken des zuvor freigelegten Wärmetauschers (8, 9, 10, 11, 12) durch eine geeignete Vorrichtung bis zu einer Aufnahmestelle (24), die unter dem zugehörigen selbsttragenden Modul (13, 14, 15, 16, 17) angeordnet ist,
- nach Abschluss der Wartungsarbeiten, Anheben des Wärmetauschers (8, 9, 10, 11, 12) in das zugehörige selbsttragende Modul (13, 14, 15, 16, 17) durch eine geeignete Vorrichtung,
- Installation von neuen Zugstangen (20b1, 20b2), und
- Montage und Einsetzen der mit dem Betrieb des Wärmetauschers verbundenen Elemente (8, 9, 10, 11, 12).

14. Verfahren zum Zerlegen und Wiederzusammenbauen eines im horizontalen Durchgang eines Heizkessels nach einem der Ansprüche 10 oder 11 montierten Wärmetauschers von oben, wobei das Verfahren mindestens die folgenden Schritte umfasst:
- Freilegen des unteren Teils des Wärmetauschers (8, 9, 10, 11, 12), insbesondere durch die Demontage der Elemente des Heizkessels (1), insbesondere des Trichters (18), die fest mit dem unteren Teil verbunden und in diesem Bereich angeordnet sind,
- Freilegen des oberen Teils des Wärmetauschers (8, 9, 10, 11, 12), insbesondere durch die Trennung des oder der Querträger (20d10, 20d2) vom selbsttragenden Modul (13, 14, 15, 16, 17), wobei die Querträger (20d1, 20d2) fest mit dem Wärmetauscher verbunden bleiben, und
- Anheben des zuvor freigelegten Austauschers (8, 9, 10, 11, 12) durch eine geeignete Vorrichtung bis zu einer Aufnahmestelle,
- nach Abschluss der Wartungsarbeiten Absenken des Wärmetauschers (8, 9, 10, 11, 12) in das zugehörige selbsttragende Modul (13, 14, 15, 16, 17) durch eine geeignete Vorrichtung,
- Befestigung des zugehörigen selbsttragenden Moduls (13, 14, 15, 16, 17) an den Querträgern (20d1, 20d2), und
- Montage und Einsetzen der mit dem Betrieb des Wärmetauschers verbundenen Elemente (8, 9, 10, 11, 12).

## Claims

1. A self-supporting module for assembly around a heat exchanger of a boiler comprising a horizontal passage, which module (13, 14, 15, 16, 17) has at least one hollow tubular upright (1311a-1311d, 1312a-1312p, 1411a-1411d, 1412a-1412o) intended to extend along the layers (11a) of said exchanger (11) and that is in fluid connection with the top part of the tank of said boiler (1) to allow the circulation of dry saturated steam in said upright (1311a-1311d, 1312a-1312p; 1411a-1411d, 1412a-1412o), the self-supporting module comprising a main part (131, 141) which comprises at least four vertical hollow tubular uprights (1311a-1311d; 1411a-1411d) defining a housing parallelepiped of said exchanger (8, 9, 10, 11, 12) and a plurality of horizontal hollow tubular uprights (1312a-1312p; 1412a-1412o) extending between two adjacent vertical uprights (1311a-1311d; 1411a-1411d) and in fluid connection with these uprights (1311a-1311d; 1411a-1411d ), at least one saturated dry steam inlet (A) connected to the top part of the tank of the boiler (1), at least one saturated dry steam outlet (B), and the vertical tubular uprights (1311a-1311d; 1411a-1411d) and horizontal tubular uprights (1312a-1312p; 1412a-1412o) being configured to ensure the circulation of the saturated dry steam in all the uprights (1311a-1311d, 1312a-1312p; 1411a-1411d, 1412a-1412o) of the main part (131, 141), the self-supporting module comprising a first plurality of screen tubes (13a, 14a) intended to be located on the outer side of the horizontal passage (5) of the boiler (1), which are arranged vertically between two vertical tubular uprights (1311c, 1311d; 1411c, 1411d) of the main part (131, 141) of the module (13, 14, 15, 16, 17), and which are in fluid connection with the main part (131, 141) of the module (13, 14, 15, 16, 17), the self-supporting module comprising a secondary part (132, 142) adjacent to the main part (131, 141) and extending laterally outside said main part (131, 141) and comprising at least one hollow tubular upper upright (1322a, 1422a) and a hollow tubular lower upright (1322b, 1422b) which are in fluid connection with the main part (131, 141) of the module (13, 14, 15, 16, 17) and between which extend a second plurality of screen tubes (13b, 14b) of which a first part (13b1, 14b1) is arranged vertically adjacent and in the same plane as the first plurality of vertical screen tubes (13a, 14a), and a second part (13b2, 14b2) is arranged horizontally at the top part of the module (13, 14), which second plurality of screen tubes (13b, 14b) is in fluid connection with the upper (1322a, 1422a) and lower (1322b, 1422b) legs of the secondary part (132, 142) of the module (13, 14).

2. The self-supporting module according to the preceding claim, **characterized in that** it comprises a fume cooling flank (13c, 14c) provided at the lower part of the secondary part (132, 142) of the module (13, 14) and comprising a plurality of hollow tubes (13c1, 14c1) welded together in parallel, configured to ensure an alternating upward and downward flow of dry saturated steam, and in fluid connection with the main part (131, 141) of the module (13, 14).

3. The self-supporting module according to the preceding claim, **characterized in that** the cooling flank (13c) is planar and arranged obliquely upward from a lower upright (1312j) of the main part (131) of the module (13).

4. The self-supporting module according to claim 2, **characterized in that** the cooling flank (14c) has a C-shaped profile extending outwardly from a lower leg (1412j) of said main part (141) of the module (14).

5. The self-supporting module according to any of the preceding claims, **characterized in that** it comprises a plurality of partitions (D1-D6) and diaphragms (C1-C4; C1-C6) arranged in at least some of the hollow uprights of the main (131, 141) and secondary (132, 142) parts of the module (13, 14).

6. An assembly formed by a vaporizer or superheater type of heat exchanger and by a self-supporting module according to any of claims 1 to 5, the self-supporting module being arranged around the heat exchanger.

7. The assembly according to the preceding claim in its dependence on claim 3, **characterized in that** the exchanger is a vaporizer (8).

8. The assembly according to claim 6 in its dependence on claim 4, **characterized in that** the exchanger is a high temperature (9) or medium temperature (10) superheater.

9. The assembly according to any one of claims 6 to 8, **characterized in that** the heat exchanger (8, 9, 10, 11, 12) and the related self-supporting module (13, 14, 15, 16, 17) are secured to each other by means of a plurality of tie rods (20b1, 20b2) integral with the top part of the heat exchanger layers via the same plurality of links (20a1, 20a2), and at least one transverse beam (20d1, 20d2) integral with said self-supporting module (13, 14, 15, 16, 17).

10. A boiler comprising a horizontal passage (5), said horizontal passage comprises a plurality of assemblies according to claim 6, the self-supporting modules (13, 14, 15, 16, 17) of each of said assemblies being in fluid connection and the first (13a, 14a, 15a, 16a, 17a) and second (13b, 14b, 15b, 16b, 17b) pluralities of screen tubes of each of said assemblies forming a screen box of the exchangers (8, 9, 10, 11, 12).

11. The boiler according to the preceding claim, **characterized in that** the horizontal passage (5) comprises at least two assemblies following the direction of the fumes, respectively left and right according to claim 7, in which the exchanger is a vaporizer (8), two assemblies, respectively left and right according to claim 8, in which the superheater is a high temperature superheater (9), two assemblies, respectively left and right according to claim 8, in which the superheater is a medium-temperature superheater (10), two assemblies, according to claim 6 together with claim 1, in which the self-supporting module (16, 17) does not comprise a cooling flank, in which the exchanger is a low-temperature superheater (11, 12).

12. A method for assembling the horizontal passage of a boiler according to claims 10 and 11, comprising at least the steps of successively installing each of the assemblies constituting the horizontal passage, these steps including lifting and placing the assemblies one by one in their final position, with connections between the assemblies being made as each assembly is placed in position.

13. The method for disassembling and reassembling from the bottom of an exchanger mounted in the horizontal passage of a boiler according to any one of claims 10 or 11, **characterized in that** it comprises at least the steps of:
- releasing the lower part of the said exchanger (8, 9, 10, 11, 12), in particular by disassembling the elements of the boiler, in particular the hopper (18), which are integral with and located at the said lower part,
- releasing the top part of the said exchanger (8, 9, 10, 11, 12), in particular by cutting the tie rods (20b1, 20b2) integral with the top part of the exchanger layers (8, 9, 10, 11, 12) and at least one transverse beam (20d1, 20d2) integral with the related self-supporting module (13, 14, 15, 16, 17) of said exchanger (8, 9, 10, 11, 12) ,
- lowering the exchanger (8, 9, 10, 11, 12) previously released by a suitable device to a receiving site (24) located under the related self-supporting module (13, 14, 15, 16, 17),
- once the maintenance operations have been carried out, lifting the exchanger (8, 9, 10, 11, 12) into the related self-supporting module (13, 14, 15, 16, 17) by a related device,
- installing new tie rods (20b1, 20b2), and
- assembling and installing the elements associated with the operation of the exchanger (8, 9, 10, 11, 12).

14. The method for disassembling and reassembling from the top an exchanger mounted in the horizontal passage of a boiler according to any of claims 10 or 11, **characterized in that** it comprises at least the steps of:
- releasing the lower part of the said exchanger (8, 9, 10, 11, 12), in particular by disassembling the elements of the boiler (1), in particular the hopper (18), which are integral with and located at the said lower part,
- releasing the top part of the said exchanger (8, 9, 10, 11, 12), in particular by separating the transverse beam(s) (20d10, 20d2) from the self-supporting module (13, 14, 15, 16, 17), which transverse beams (20d1, 20d2) remain integral with the exchanger, and
- lifting the exchanger (8, 9, 10, 11, 12) previously released by a suitable device to a reception site,
- once the maintenance operations have been carried out, lowering the exchanger (8, 9, 10, 11, 12) into the related self-supporting module (13, 14, 15, 16, 17) by an adapted device,
- securing to the transverse beams (20d1, 20d2) of the related self-supporting module (13, 14, 15, 16, 17), and
- assembling and installing the elements associated with the operation of the exchanger (8, 9, 10, 11, 12).
